Europäisches Patentamt

European Patent Office

Office européen des brevets

(19)

(11) **EP 0 799 768 B1**

(12) **FASCICULE DE BREVET EUROPEEN**

(45) Date de publication et mention
de la délivrance du brevet:
**23.10.2002 Bulletin 2002/43**

(51) Int Cl.⁷: **B64G 1/10**, B64G 1/24

(21) Numéro de dépôt: **97400773.4**

(22) Date de dépôt: **03.04.1997**

(54) **Procédé et système de mise en orbite d'un véhicule spatial avec des propulseurs à forte impulsion spécifique**

System und Verfahren um mit Triebwerken mit hohen spezifischen Impulsen versehen ein Raumfahrzeug in eine Umlaufbahn zu bringen

System and method of bringing into orbit a spacecraft with high specific impulse thrusters

(84) Etats contractants désignés:
**DE GB**

(30) Priorité: **05.04.1996 FR 9604330**

(43) Date de publication de la demande:
**08.10.1997 Bulletin 1997/41**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeur: **Koppel, Christophe**
**77176 Nandy (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 047 211**     **EP-A- 0 673 833**

- **ASTRONAUTICA ACTA, vol. 13, no. 3, 1967, GREAT BRITAIN, pages 269-279, XP002020395 MAREC: "TRANSFERTS CONOMIQUES PLANS DE TYPE HOHMANN ENTRE ORBITES QUASI-CIRCULAIRES COAXIALES PROCHES"**
- **JOURNAL OF GUIDANCE, CONTROL AND DYNAMICS, vol. 9, no. 3, Juin 1986, AUSTI, TEXAS, USA, pages 274-280, XP002020396 VINH ET AL.: "EXPLICIT GUIDANCE OF DRAG-MODULATED AEROASSISTED TRANSFER BETWEEN ELLIPTICAL ORBITS"**
- **14TH AIAA INTERNATIONAL COMMUNICATION SATELLITE SYSTEMS CONFERENCE, 22 Mars 1992, pages 1-9, XP002020397 PORTE ET AL.: "BENEFITS OF ELECTRIC PROPULSION FOR ORBIT INJECTION OF COMMUNICATION SPACECRAFT"**

## Description

Domaine de l'invention

La présente invention a pour objet un procédé de mise en orbite pour placer un véhicule spatial, tel qu'un satellite, sur une orbite visée telle que celle adaptée à un fonctionnement opérationnel normal du véhicule spatial, à partir d'une orbite de largage elliptique sensiblement différente et notamment plus excentrique que l'orbite visée.

Art antérieur

Les satellites artificiels sont pour la plupart maintenant équipés d'un système propulsif leur permettant de se déplacer dans l'espace, notamment pour corriger les imperfections de leur trajectoire, dues en particulier aux imperfections de leur mise en orbite, aux actions gravitationnelles de la Lune, du Soleil, aux effets du potentiel terrestre non sphérique, aux effets aérodynamiques, magnétiques, électriques terrestres, aux actions du rayonnement solaire. Le système propulsif des satellites permet également de mettre ceux-ci à poste, d'effectuer des modifications d'orbite, d'assurer une orientation convenable dans l'espace ou encore d'assurer la pérennité du système de contrôle d'attitude en assurant la fonction de désaturation des roues à moment d'inertie équipant ces satellites.

De tels systèmes propulsifs assurent en général au satellite une capacité de mouvement dans toutes les directions, une direction étant en général privilégiée pour la réalisation des mouvements de grande amplitude.

En ce qui concerne le bilan de masse, la masse du système propulsif du satellite occupe généralement une place importante sinon la première place.

La plupart des industriels de la propulsion se sont intéressés très tôt aux techniques visant à réduire la masse du système propulsif. Sachant que l'impulsion spécifique est une valeur caractéristique d'un propulseur caractérisant l'impulsion fournie par unité de masse éjectée ou consommée, des moteurs à forte impulsion spécifique ont été imaginés, développés et évalués. On peut citer par exemple les propulseurs du type "résistojet", les propulseurs plasmiques à dérive fermée d'électrons, les propulseurs à émission de champ FEEP, les propulseurs ioniques à bombardement, les propulseurs héliothermiques.

Par principe, l'augmentation d'impulsion spécifique est basée sur la transformation d'une puissance de masse nulle, c'est-à-dire d'une puissance dont la production ne consomme pratiquement pas de masse de matière, en puissance mécanique appliquée à des particules de matière. Cette puissance de masse nulle est en pratique la puissance électrique ou thermique obtenue à partir du rayonnement solaire ou encore celle obtenue par un générateur radio-isotoplque.

La poussée obtenue par ce genre de propulseurs à impulsion spécifique élevée dépend donc du niveau de la puissance électrique ou thermique que l'on peut leur fournir. Cette puissance est, sur un satellite, limitée par la taille des générateurs solaires, par celle des concentrateurs d'énergie thermique solaire ou celle du générateur radio-isotopique ou encore celle des accumulateurs d'énergie. Il s'ensuit que la poussée délivrée par tout propulseur à forte impulsion spécifique est faible ou très faible comparée à la poussée d'un moteur chimique traditionnel, par exemple de 400 N (valeur typique pour un moteur d'apogée de satellite).

L'impulsion spécifique est d'autant plus importante que la puissance électrique ou thermique transformée en puissance mécanique appliquée à la même masse de particules est plus importante. Ainsi, plus les propulseurs ont une impulsion spécifique importante, plus leur poussée est faible pour une même puissance électrique ou thermique consommée. Cette propriété est pratiquement valable pour tous types de propulseurs à forte impulsion spécifique.

Cette propriété se répercute de la façon suivante au niveau des systèmes de propulsion : pour une même impulsion totale fournie (qui est la valeur cumulée ou intégrée sur la durée totale de tir de la force fournie à un engin par unité de temps), il y a à la fois diminution remarquable de la masse de matière consommée par les propulseurs à plus forte impulsion spécifique et augmentation tout aussi forte de la durée de fonctionnement des propulseurs.

Le type de propulsion à forte impulsion spécifique s'avère convenable et permet d'obtenir de réels avantages par rapport aux systèmes à propulsion chimique (et à impulsion spécifique moins importante) pour les manoeuvres effectuées alors que le satellite se trouve sur son orbite nominale opérationnelle, les efforts à fournir étant faibles ou très faibles.

Il en va tout autrement lorsque le largage du satellite est effectué sur une orbite très différente de son orbite nominale et que le satellite a besoin de faire fonctionner son propre système propulsif pour effectuer le déplacement de son orbite de largage à son orbite nominale.

En effet, dans ce cas, la durée totale de la manoeuvre de transfert a tendance à être importante alors qu'il convient au contraire de pouvoir minimiser celle-ci. En effet, plus la durée totale de la manoeuvre de transfert est importante, plus les frais financiers et le coût de la mise en orbite (avec les frais des stations au sol et des équipes de suivi au sol) s'accroissent. Par ailleurs, une durée de manoeuvre de transfert importante augmente les risques de dégradation du véhicule spatial lors de la traversée des ceintures de Van Allen (dont la localisation est variable, mais qui peuvent être situées par exemple au voisinage des altitudes 1800 km, 2000 km, 10.000 km, 21.000 km).

Il peut être souhaitable de réduire au minimum le nombre de révolutions que le véhicule effectue en suivant des orbites traversant les ceintures de Van Allen, notamment pour minimiser les durcissements supplémentaires des composants ou des cellules solaires vis-à-vis des ondes électromagnétiques ou des radiations émises par les protons ou les électrons présents dans les ceintures.

On a déjà proposé divers exemples de manoeuvres de satellites faisant appel à des propulseurs à forte impulsion spécifique et faible poussée.

Ainsi, l'article de A. G. Schwer, U. M. Schöttle, E. Messerschmid de l'Université de Stuttgart (Allemagne), publié lors du 46ème Congrès Astronautique International en 1995 et intitulé "Operational Impacts and Environmental Effects on Low-Thrust Transfer-Missions of Telecommunication Satellites" montre une manoeuvre de transfert entre une orbite de largage classique constituée par l'orbite de transfert géostationnaire (GTO) de la fusée Ariane 4 et une orbite finale constituée par une orbite géostationnaire (GEO). La manoeuvre de transfert comprend un grand nombre d'arcs de poussée autour de l'apogée de l'orbite GTO créés par des propulseurs de type "Arcjet" à forte impulsion spécifique, de telle sorte que l'orbite du satellite se déforme progressivement jusqu'à atteindre l'orbite géostationnaire finale GEO.

Le document EP-B 0 047 211 (invention de A. Mortelette) décrit également un procédé de changement d'orbite par arcs de poussée.

Dans le cas des deux procédés décrits dans les deux documents précités, l'altitude de l'apogée est contrainte de rester constante ou de ne subir qu'une très faible évolution. La durée requise par les manoeuvres décrites est assez considérable, de sorte que pour diminuer la durée, il faut augmenter la poussée. Par ailleurs, le nombre d'allumages du moteur est également important et ceci peut induire des contraintes opérationnelles importantes. En effet, lorsque le satellite évolue sur une orbite de période sidérale variable et évoluant constamment en fonction du degré d'avancement de la mise en orbite, et différente, voire très différente de celle de rotation de la Terre, le satellite n'est pas toujours visible d'une même station au sol lorsqu'il faut procéder à l'allumage des propulseurs. Il en résulte qu'une procédure de mise en orbite entraînant de nombreux allumages de propulseurs ne peut pas être effectuée en toute sécurité avec une seule station au sol. Il faut au contraire pouvoir utiliser pendant la totalité de la durée de la mise en orbite plusieurs stations au sol localisées en des endroits différents. Or, le coût des opérations au sol et de location des stations au sol est non négligeable.

Pour les types de mise en orbite pris en compte dans les documents cités ci-dessus, afin de diminuer la durée totale de manoeuvre, il vaudrait mieux disposer de propulseurs à forte poussée. Mais, dans ce cas, à puissance égale fournie aux propulseurs, l'impulsion spécifique ne saurait être que plus faible et par conséquent la masse consommée pendant la manoeuvre serait plus importante. Les diverses solutions déjà préconisées pour ce type de mise en orbite sont donc relativement peu performantes.

Il a par ailleurs déjà été proposé par Irving, pour passer d'une orbite initiale circulaire à une orbite finale circulaire, de faire fonctionner constamment des propulseurs alignés soit selon l'horizontale locale, soit selon la vitesse orbitale (vitesse relativement à la Terre) pour que l'orbite se déforme progressivement et arrive à proximité immédiate de l'orbite finale visée, ou même atteigne celle-ci. Ce type de manoeuvre conduit à une trajectoire de type spiralée et un seul allumage de propulseur permet de réaliser la manoeuvre. Toutefois, le nombre de révolutions dans les ceintures de Van Allen n'est pas optimisable, ce qui est un inconvénient et, surtout, ce type de manoeuvre ne s'applique, à ce jour, qu'à des transferts entre orbites circulaires ou, le cas échéant, entre orbites elliptiques particulières.

On a encore proposé d'effectuer la combinaison d'un ensemble de manoeuvres par arcs de poussée et d'une manoeuvre subséquente de type spiralée, dans le cadre d'une manoeuvre particulière décrite dans le document EP-A-0 673 833 (invention de A. Spitzer). Ce type de mise en orbite s'avère assez peu performant, notamment en durée, lorsque la seule propulsion à forte impulsion spécifique ou à faible poussée est utilisée. Le nombre de révolutions traversant les ceintures de Van Allen est élevé et le nombre d'allumages des propulseurs est important et malheureusement, ce nombre important d'allumages est nécessaire pendant la première phase d'augmentation d'altitude de périgée où la période sidérale est en particulier différente de la période de rotation sidérale terrestre.

A. Spitzer a encore proposé une solution utilisant une propulsion "hybride", c'est-à-dire à la fois des moteurs chimiques classiques mis en service dans une première phase de manoeuvre par plusieurs arcs de poussée, et des propulseurs à forte impulsion spécifique mis en service dans une deuxième phase de manoeuvre spiralée. Dans ce cas, la durée totale de la manoeuvre de transfert est largement diminuée et le nombre de révolutions dans les ceintures de Van Allen est plus faible. En revanche, la masse consommée pendant la manoeuvre est relativement importante et, surtout, il y a dans ce cas présence de deux types différents de systèmes propulsifs, ce qui a pour effet d'augmenter les coûts par rapport à des systèmes à un seul type de propulsion, de rendre plus complexe l'architecture du satellite, d'augmenter les coûts de préparation au lancement, du fait notamment du remplissage des différents réservoirs avec des produits différents et des précautions nécessaires eu égard aux risques de pollution ou d'incendie.

## Objet et description succincte de l'invention

La présente invention vise à remédier aux inconvénients précités et à permettre en particulier à un satellite largué par un lanceur ou un véhicule spatial sur une orbite qui n'est pas l'orbite normale opérationnelle du satellite de rejoindre cette orbite de façon particulièrement performante en utilisant des propulseurs à forte impulsion spécifique et de faible poussée.

L'invention vise en particulier à permettre de minimiser la durée de la manoeuvre de transfert d'une orbite de largage à une orbite visée.

L'invention vise encore à augmenter la sécurité des manoeuvres.

Un autre but de l'invention consiste à réduire le coût de fabrication du véhicule spatial et de sa mise en oeuvre, et de réduire les risques liés à l'utilisation de produits chimiques.

Ces buts sont atteints grâce à un procédé de mise en orbite pour placer un véhicule spatial, tel qu'un satellite, sur une orbite visée, telle que celle adaptée à un fonctionnement opérationnel normal du véhicule spatial, à partir d'une orbite de largage elliptique sensiblement différente de l'orbite visée et notamment présentant une excentricité différente de celle de l'orbite visée, caractérisé en ce qu'on fait décrire au véhicule spatial une trajectoire spiralée composée d'une pluralité d'orbites intermédiaires en tir continu unique d'un ensemble de propulseurs à forte impulsion spécifique, montés sur le véhicule spatial, on contrôle l'évolution de la trajectoire spiralée de telle manière qu'à chaque révolution successive, au moins pendant une première phase de manoeuvre, il se produise une augmentation d'altitude de périgée, une évolution dans un sens déterminé de l'altitude d'apogée et une diminution de l'éventuel écart d'inclinaison d'une orbite intermédiaire par rapport à l'orbite visée puis, au moins au cours d'une deuxième phase de manoeuvre, les évolutions des altitudes de périgée et d'apogée sont contrôlées individuellement dans des sens prédéterminés constants tandis que l'on continue de réduire l'éventuel écart d'inclinaison d'une orbite intermédiaire par rapport à l'orbite visée jusqu'à ce que les altitudes d'apogée, de périgée et les inclinaisons orbitales d'une orbite intermédiaire du véhicule spatial atteignent sensiblement celles de l'orbite visée.

L'ensemble des propulseurs à forte impulsion spécifique peut, le cas échéant, comprendre un propulseur unique à forte impulsion spécifique.

Ainsi, un seul type de propulseurs est nécessaire pour réaliser la mise en orbite.

Cependant, il n'est pas exclu d'inclure des propulseurs auxiliaires de types différents, tels que des propulseurs à gaz froids ou résistojets, utilisant le même gaz que les propulseurs à forte impulsion spécifique, le xénon par exemple, pour disposer, pendant de courts instants, de poussées plus importantes, sans avoir les inconvénients précités de la propulsion chimique.

De tels propulseurs auxiliaires peuvent être utilisés dans une phase initiale pour contrôler par exemple les moments parasites entraînés par le déploiement des panneaux solaires.

Selon un premier mode particulier de réalisation, dans le cas d'un véhicule spatial largué sur une orbite elliptique sensiblement différente de celle de l'orbite visée pour un fonctionnement opérationnel normal du véhicule, durant la première phase de la manoeuvre, depuis le début de tir continu des propulseurs, il est réalisé, à chaque révolution successive, une augmentation de l'altitude d'apogée et une augmentation moindre de l'altitude de périgée d'une orbite intermédiaire puis, durant la deuxième phase de la manoeuvre, jusqu'à la fin du tir continu, il est réalisé, à chaque révolution successive, une diminution de l'altitude d'apogée et une augmentation de l'altitude de périgée d'une orbite intermédiaire.

Selon un deuxième mode particulier de réalisation, durant la première phase de la manoeuvre, en début de tir continu des propulseurs, il est réalisé, à chaque révolution successive, une augmentation de l'altitude d'apogée et une augmentation de l'altitude de périgée d'une orbite intermédiaire puis, durant la deuxième phase de la manoeuvre, vers le milieu du tir continu, il est réalisé, à chaque révolution successive, une diminution de l'altitude d'apogée et une augmentation de l'altitude de périgée d'une orbite intermédiaire puis, lors d'une troisième phase de la manoeuvre, lorsque l'excentricité d'une orbite intermédiaire du véhicule spatial atteint sensiblement celle de l'orbite visée, en fin de tir continu, il est réalisé, à chaque révolution successive, une diminution de l'altitude d'apogée, une diminution de l'altitude de périgée et toujours une diminution de l'éventuel écart d'inclinaison d'une orbite intermédiaire par rapport à l'orbite visée, jusqu'à ce que les altitudes d'apogée, de périgée et les inclinaisons orbitales d'une orbite intermédiaire du véhicule spatial atteignent sensiblement celles de l'orbite visée.

Selon un troisième mode particulier de réalisation, durant la première phase de la manoeuvre, en début de tir continu des propulseurs, il est réalisé, à chaque révolution successive, une diminution de l'altitude d'apogée et une augmentation de l'altitude de périgée d'une orbite intermédiaire puis, lors de la deuxième phase de la manoeuvre, en fin de tir continu, lorsque l'excentricité d'une orbite intermédiaire du véhicule spatial atteint sensiblement celle de l'orbite visée, il est réalisé, à chaque révolution successive, une diminution de l'altitude d'apogée et une diminution de l'altitude de périgée d'une orbite intermédiaire.

L'invention concerne également un système de mise en orbite pour placer un véhicule spatial, tel qu'un satellite, sur une orbite visée telle que celle adaptée à un fonctionnement opérationnel normal du véhicule spatial, à partir d'une orbite de largage elliptique sensiblement différente de l'orbite visée et notamment présentant une excentricité différente de celle de l'orbite visée, caractérisé en ce qu'il comprend :

-  un ensemble de plates-formes montées sur le véhicule spatial,

- un ensemble de propulseurs montés sur lesdites plates-formes et présentant une forte impulsion spécifique supérieure à 5000 Ns/kg et une faible poussée, inférieure à 10 N, pour créer une force de poussée totale appliquée au véhicule spatial,

- un dispositif de commande de mise en fonctionnement des propulseurs de façon continue après le largage du véhicule spatial pour permettre à ce véhicule spatial d'atteindre, par une trajectoire spiralée totale, aux éventuelles interruptions de servitude près, une orbite visée et d'achever le tir des propulseurs lorsque les altitudes d'apogée, de périgée et les inclinaisons orbitales d'une orbite intermédiaire du véhicule spatial sont sensiblement égales à celles de l'orbite visée,

- un dispositif de commande d'orientation de la poussée comprenant au moins des premiers moyens pour générer, pendant une première phase de tir continu de l'ensemble des propulseurs, une première commande d'orientation de la poussée totale conduisant, à chaque révolution successive du véhicule spatial, pour chaque orbite intermédiaire, à une évolution dans un sens déterminé de l'altitude d'apogée, à une augmentation de l'altitude de périgée, et à une diminution de l'éventuel écart d'inclinaison d'une orbite intermédiaire par rapport à l'orbite visée, et au moins des seconds moyens pour générer, pendant une deuxième phase de tir de l'ensemble des propulseurs, une deuxième commande d'orientation de la poussée totale conduisant, à chaque révolution successive du véhicule spatial, pour chaque orbite intermédiaire, à des évolutions de l'altitude d'apogée et de l'altitude de périgée contrôlées individuellement dans des sens prédéterminés constants et à une diminution de l'éventuel écart d'inclinaison d'une orbite intermédiaire par rapport à l'orbite visée.

Avantageusement, l'ensemble de propulseurs présentant une forte impulsion spécifique comprend des propulseurs du type plasmique à dérive fermée d'électrons, des propulseurs ioniques ou des propulseurs du type "Arcjet" (à arc électrique).

Selon un mode de réalisation particulier, lesdits premiers et seconds moyens pour générer les première et deuxième commandes d'orientation de la poussée totale sont actionnés pendant que le dispositif de commande de mise en fonctionnement des propulseurs de façon continue agit toujours de sorte que le tir soit continu.

De façon plus particulière, lesdits premiers moyens dudit dispositif de commande d'orientation de la poussée comprennent des moyens d'alignement de la poussée totale dans un plan horizontal local, principalement orienté dans le sens de la vitesse du véhicule spatial.

Dans ce cas, de façon plus particulière, lesdits seconds moyens dudit dispositif de commande d'orientation de la poussée comprennent des moyens d'alignement de la poussée totale autour de l'apogée dans un plan horizontal local, principalement orienté dans le sens de la vitesse du véhicule spatial, et des moyens d'alignement de la poussée totale autour du périgée selon la direction opposée à la vitesse orbitale du véhicule spatial, et dans un plan sensiblement orthogonal au plan orbital.

Les moyens d'alignement de la poussée totale autour de l'apogée orientent la poussée totale sensiblement sur la demi-ellipse osculatrice centrée sur l'apogée.

Les moyens d'alignement de la poussée totale autour du périgée orientent la poussée totale sensiblement sur la demi-ellipse osculatrice centrée sur le périgée.

Selon une variante de réalisation, lesdits seconds moyens dudit dispositif de commande d'orientation de la poussée comprennent des moyens d'alignement de la poussée dans un plan passant selon des directions fixes ou quasi fixes dans l'espace et passant par une perpendiculaire au plan tangent orbital.

Le système peut comprendre des moyens d'orientation de la poussée totale constitués par des moyens propres au véhicule spatial tels que des roues à inertie d'un système de contrôle d'attitude du véhicule spatial.

Le système peut encore comprendre des moyens d'orientation de poussée totale constitués par au moins certaines desdites plates-formes de support de l'ensemble de propulseurs, lesquelles plates-formes sont orientables. Des propulseurs à poussée modulable peuvent aussi être utilisés.

Le système selon l'invention peut comprendre des moyens d'orientation de la poussée totale comprenant des moyens de pointage différentiel desdites plates-formes orientables et des moyens d'asservissement de la poussée de chaque propulseur d'une valeur prédéterminée permettant de réaliser une poussée totale passant par le centre de masse du véhicule spatial présentant une composante hors du plan orbital.

Avantageusement les plates-formes orientables présentent une capacité d'orientation supérieure à 10° au moins suivant un axe.

Selon une mise en oeuvre avantageuse de l'invention, les propulseurs présentant une forte Impulsion spécifique constituent en outre des moyens de contrôle d'attitude et d'orbite du véhicule spatial tel qu'un satellite.

On peut noter qu'avec le procédé selon l'invention, en observant une augmentation continue du périgée, se terminant éventuellement par une diminution d'altitude, et une variation d'altitude d'apogée débutant par une augmentation et se terminant par une diminution, on peut, à partir d'une orbite de largage elliptique pratiquement quelconque, rejoindre une multitude d'orbites finales très diverses, tout en maintenant les propulseurs continuellement en fonction.

En particulier, dans le cas où l'orbite de largage et l'orbite finale visée possèdent des apogées proches, selon l'invention, il suffit de faire en sorte que l'augmentation d'altitude d'apogée au cours du tir des propulseurs soit sensiblement égale à sa diminution. Dans ce cas, la totalité de la manoeuvre peut se résumer, in fine, par une augmentation de l'altitude de périgée.

Bien que le type de manoeuvre défini dans le procédé et le système selon l'invention puisse être appliqué à des orbites de largage elliptique quelconques par rapport à l'orbite visée, la présente invention se trouve être particulièrement intéressante dans le cas où l'orbite de largage est elliptique, assez excentrique (avec une excentricité supérieure à 0,2) de période sidérale plus faible que celle de l'orbite visée (ce qui implique en particulier que l'altitude de périgée de l'orbite de largage soit plus faible que celle de l'orbite finale visée), ayant un apogée proche de celui de l'orbite visée et l'orbite finale visée est circulaire ou faiblement excentrique (avec une excentricité inférieure à 0,1). De tels cas se présentent lors du lancement en orbite de transfert géostationnaire d'un satellite géostationnaire, ou encore dans le cas de lancement en orbite de transfert d'un satellite destiné à une orbite circulaire d'altitude moyenne (20.000 km par exemple). En effet, des augmentations successives d'apogée pendant le tir conduisent à une meilleure efficacité de la manoeuvre qui consiste principalement à augmenter l'altitude de périgée. En fin de tir des propulseurs, les diminutions successives d'altitude d'apogée conduisent à une consommation supplémentaire pour les propulseurs mais celle-ci reste modeste et au total a permis une réduction significative de la durée totale de la manoeuvre.

Le procédé selon l'invention peut s'appliquer de façon avantageuse lorsque l'orbite de largage est elliptique de période sidérale plus faible que celle de l'orbite finale visée, l'altitude d'apogée de l'orbite de largage étant même largement différente de celle de l'orbite visée et l'orbite finale visée étant circulaire.

Le troisième mode de réalisation de l'invention est particulièrement adapté à la minimisation du nombre de révolutions dans les ceintures de Van Allen. Selon ce procédé, on effectue un tir continu des propulseurs à forte impulsion spécifique et on oriente leur poussée totale, par exemple pour augmenter l'altitude de périgée et diminuer l'altitude d'apogée des orbites intermédiaires puis, sans arrêter le fonctionnement des propulseurs, on oriente leur poussée totale pour toujours diminuer l'altitude d'apogée et diminuer en même temps l'altitude de périgée de telle sorte que, finalement, les altitudes de périgée et d'apogée coïncident avec celles de l'orbite finale visée.

Un tel mode de réalisation particulier est bien adapté au cas du lancement d'un véhicule spatial sur une orbite de transfert très fortement excentrique et de période sidérale supérieure ou égale à celle de l'orbite visée. Un exemple caractéristique extrême est le lancement d'un satellite, destiné à une orbite géostationnaire de période 1 jour, sur une orbite de 620 km de périgée et de 330.000 km d'apogée, c'est-à-dire une orbite de période 8 jours. Avec une masse initiale de 2950 kg et une poussée totale de 0,64 N, on peut faire fonctionner les propulseurs à forte impulsion spécifique selon l'invention de manière à n'avoir que deux révolutions dans les ceintures de Van Allen. En ne mettant en oeuvre qu'un nombre aussi réduit d'orbites intermédiaires traversant les ceintures de Van Allen, le procédé selon l'invention s'avère ici aussi performant que les procédés classiques mettant en oeuvre une propulsion à forte poussée.

Parmi les avantages du procédé et du système selon l'invention, on peut relever que la manoeuvre permettant par exemple de déplacer un satellite de l'orbite de transfert géostationnaire classique (GTO) jusqu'à l'orbite géostationnaire (GEO), moyennant un seul allumage des propulseurs, constitue un avantage important car les opérations d'allumage sont toujours relativement délicates. Il est ainsi souhaitable de limiter ces opérations d'allumage dès lors que l'allumage est caractéristique d'un état transitoire qui requiert toujours une grande attention. Par exemple, dans le cas d'un propulseur électrique, il faut compter quelques minutes pour préparer et mettre en fonctionnement le propulseur, et ceci selon un chronogramme particulier. De plus, lorsque l'on utilise plusieurs propulseurs pour effectuer la manoeuvre, il faut pouvoir assurer la simultanéité des allumages des différents propulseurs, surtout si leur poussée individuelle ne passe pas à proximité du centre de masse du véhicule spatial. Si la simultanéité n'est pas assurée, il faut alors agir au niveau du système de contrôle d'attitude du véhicule spatial pour annuler les dérives d'attitude. Le système de contrôle peut arriver à saturation et la mise en fonctionnement doit alors être avortée pour être tentée de nouveau ultérieurement. Il est donc bien particulièrement avantageux de pouvoir faire en sorte que, pendant toute la durée du déplacement entre l'orbite de largage et l'orbite visée, en particulier au moins tant que les périodes sidérales des orbites intermédiaires diffèrent sensiblement de la période de rotation sidérale de la Terre, il n'y ait besoin de procéder qu'à un seul allumage de propulseurs. Cet allumage unique pourra être effectué dans les meilleures conditions de visibilité du satellite depuis une station au sol. Il n'est ainsi pas nécessaire de disposer de plusieurs stations au sol et, de plus, le lieu où s'effectue l'unique allumage importe relativement peu. De plus, cet avantage d'un seul allumage montre que la mise en orbite selon l'invention se prête bien à l'automatisation des commandes et, par suite, à l'autonomie du véhicule spatial pendant la mise en orbite et, par suite, à une réduction des frais de mise en orbite.

Un autre avantage important de la présente invention réside dans le fait qu'une manoeuvre complète de mise en orbite ne fait appel qu'à un seul type de propulseurs, à savoir des propulseurs à forte impulsion spécifique ou, le cas échéant, à des propulseurs auxiliaires utilisant le même gaz inerte que ces propulseurs à forte impulsion spécifique. Ceci contribue à réduire le coût du véhicule spatial et de sa mise en oeuvre et limite les risques liés à l'utilisation de produits chimiques et hypergoliques ou autres produits toxiques, dès lors que les principaux types de propulseurs à forte impulsion spécifique n'utilisent pratiquement pas de produits chimiques mais au contraire font appel à un gaz inerte tel que le xénon.

Par ailleurs, comme par principe une manoeuvre selon l'invention induit un fonctionnement continu des propulseurs, la masse consommée par les propulseurs pendant la manoeuvre est directement proportionnelle à la durée de la manoeuvre. Il s'ensuit que, dans le cadre de la présente invention, il suffit d'optimiser les orientations des propulseurs en cours de manoeuvre en vue de minimiser la durée de la manoeuvre pour que la masse consommée pendant la manoeuvre soit également minimisée.

Diverses méthodes d'optimisation peuvent être utilisées pour déterminer les lois d'orientation adéquates tout en respectant les critères d'évolution des paramètres d'apogée et de périgée proposés.

C'est ainsi qu'en particulier, pour ce qui concerne les orientations en début de manoeuvre, une loi de poussée dans le plan horizontal local s'avère particulièrement performante à partir d'une orbite de transfert géostationnaire classique GTO. Pour ce qui concerne la fin d'une manoeuvre, une loi de poussée dans le plan horizontal autour de l'apogée de l'orbite et anti-tangentielle à la vitesse orbitale autour du périgée est satisfaisante. Une loi à orientation fixe ou inertielle est également intéressante en cours de manoeuvre.

En fin de manoeuvre, il peut être avantageux de disposer d'un satellite orienté vers la Terre (conséquence d'une loi d'orientation de la poussée dans le plan horizontal local) pour notamment effectuer, simultanément à la finalisation de la manoeuvre de mise en orbite (et pendant le fonctionnement des propulseurs), certains réglages nécessaires à la charge utile par exemple.

On notera que les mesures préconisées selon la présente invention pour l'orientation des propulseurs s'avèrent, pour le cas d'une mise en orbite géostationnaire à partir d'une orbite de transfert classique, être particulièrement adaptées à la réalisation de manoeuvres de courte durée sans pour autant augmenter de façon sensible la masse de matière consommée pendant cette durée par rapport à des systèmes classiques à propulsion chimique.

Ainsi, à titre d'exemple, la manoeuvre d'un satellite de 2950 kg, équipé de propulseurs plasmiques de poussée totale 0,64 N, de forte impulsion spécifique 16000 Ns/kg d'une puissance spécifique de 16 kW/N et largué en orbite de transfert géostationnaire du type de celles prévues pour les lanceurs Ariane 5 (apogée de 36 000 km et périgée de 620 km) ne dure que 3,7 mois pour une puissance électrique consommée de 10 kW et la masse consommée pour le transfert d'orbite vers l'orbite géostationnaire est de 380 kg.

Pour le type de mise en orbite selon l'invention, on peut introduire la notion d'impulsion spécifique de la manoeuvre, défini par le rapport de l'impulsion totale fournie pour réaliser la manoeuvre de mise en orbite par la masse initiale (Mi en kg) du véhicule,

$$I_{spmanoeuvre} = F \times \Delta t / Mi.$$

Comme il s'agit d'un tir continu des propulseurs, l'impulsion totale fournie est en effet égale au produit de la force F (en Newton) par la durée de la manoeuvre $\Delta t$ (en secondes).

Pour l'exemple considéré, l'$I_{spmanoeuvre}$ est de 2070 N.s/kg. Cette quantité dépend relativement peu de l'impulsion spécifique des propulseurs (dans la mesure où cette dernière est élevée). Cette notion d'impulsion spécifique de la manoeuvre permet d'évaluer rapidement les avantages et les caractéristiques principaux de la mise en orbite selon l'invention.

Par comparaison, un satellite classique de même charge utile utilisant la propulsion chimique classique devrait avoir au décollage une masse de 4100 kg, soit plus d'une tonne supplémentaire, ce qui augmente le coût de lancement ou, à coût de lancement égal, diminue la charge utile et donc la rentabilité du véhicule spatial.

Par ailleurs, avec un satellite de même charge utile utilisant un type de propulsion à forte impulsion spécifique de 16.000 Ns/kg avec des poussées analogues à celle de l'exemple susmentionné (0,64 N), mais utilisant, pour effectuer le transfert d'orbite, par exemple une méthode d'arc de poussée autour de l'apogée de l'orbite ou même une méthode constituée d'arcs de poussée autour de l'apogée et d'arcs de poussée autour du périgée, la masse au décollage resterait du même ordre de grandeur (par exemple 2860 kg), mais la durée nécessaire pour la manoeuvre de mise sur l'orbite finale serait allongée à 4,8 mois, soit une durée allongée de près de 30% par rapport à celle d'un satellite mis en orbite selon la présente invention.

L'avantage apporté ainsi par la présente invention est très significatif car il conduit à réduire en particulier les frais financiers engendrés par l'investissement qu'il faut réaliser pour la construction du satellite et son lancement avant qu'il ne devienne rentable. De plus, les moyens au sol sont mobilisés moins longtemps pendant la manoeuvre et donc au total sont moins coûteux.

Un autre avantage apporté par le type de manoeuvre effectué conformément à l'invention réside dans une réduction significative de la durée de traversée des ceintures de Van Allen par rapport à une manoeuvre par arc de poussée. Le fait d'augmenter l'altitude de l'apogée des orbites intermédiaires permet en particulier d'augmenter la vitesse au voisinage de leur périgée, là où justement se trouvent les ceintures de protons et d'électrons, ce qui conduit bien à une durée de traversée des ceintures de Van Allen qui est moindre que dans le cas d'un transfert par arcs de poussée à l'apogée, utilisant les mêmes propulseurs. En outre, l'augmentation d'altitude de périgée est beaucoup plus rapide, donc au total le nombre de passages dans les ceintures de Van Allen est aussi nettement réduit.

Un autre avantage lié à la présente invention consiste en une efficacité d'autant plus grande que l'orbite de largage est largement inclinée par rapport à l'orbite finale visée. En effet, et ceci est un avantage caractéristique propre aux orbites supergéosynchrones par exemple, l'augmentation d'altitude d'apogée permet de corriger avec une meilleure efficacité l'écart d'inclinaison, cette efficacité étant d'autant meilleure que l'altitude est plus élevée. On vérifie simplement aussi dans ce cas que l'apogée des orbites intermédiaires est bien situé dans le plan de l'orbite finale visée et que la poussée totale est orientée autour de l'apogée de manière à réduire l'écart d'inclinaison, la poussée étant partiellement hors du plan orbital. Un maximum d'efficacité de la manoeuvre est obtenu lorsque les orientations de la poussée totale ne modifient aucun autre paramètre orbital que les altitudes d'apogée, de périgée et l'inclinaison. Il s'ensuit que si, lorsque le satellite est largué, l'apogée de l'orbite est dans le plan de l'orbite finale visée, alors cette configuration perdure et la correction d'écart d'inclinaison s'effectue avec une grande efficacité. Les actions généralement appelées perturbatrices dues à la Lune, au Soleil ou au potentiel gravitationnel non sphérique de la Terre, peuvent être prises en compte pour améliorer éventuellement l'efficacité de la correction.

Un autre avantage lié à la présente invention réside dans la possibilité de déployer complètement ou partiellement le satellite avant la mise en fonctionnement des propulseurs. Ceci est rendu possible par le fait que les propulseurs à forte impulsion spécifique sont de faible poussée de sorte que leurs actions ne créent pas de contraintes susceptibles de détériorer les structures fragiles telles que les panneaux solaires ou concentrateurs solaires, les antennes et mâts déployables.

Dans certains cas, les antennes peuvent n'être déployées qu'après la fin du tir des propulseurs, si ces derniers sont positionnés de telle sorte qu'ils puissent polluer ou éroder les surfaces actives des antennes. A l'inverse, un déploiement des panneaux solaires, avant même le début d'un tir des propulseurs, permet ensuite aux propulseurs à forte impulsion spécifique d'utiliser effectivement la puissance électrique produite par les panneaux solaires.

Brève description des dessins

D'autres caractéristiques et avantages de l'invention ressortiront de la description suivante de modes particuliers de réalisation de l'invention, donnés à titre d'exemples, en référence aux dessins annexés, sur lesquels :

- la Figure 1 est un diagramme montrant une mise en orbite géostationnaire de conception classique avec une impulsion en un point ;
- la Figure 2 est un diagramme montrant une mise en orbite de type spiralée, avec un fonctionnement continu des propulseurs, à partir d'une orbite de largage circulaire ;
- la Figure 3 est un diagramme montrant une mise en orbite de type par arcs de poussée, avec un fonctionnement discontinu des propulseurs, à partir d'une orbite de largage elliptique ;
- la Figure 4 est un diagramme en perspective montrant une mise en orbite conforme à l'invention, de type spiralée, avec un fonctionnement continu des propulseurs, à partir d'une orbite de largage elliptique ;
- les Figures 5 et 6 sont des vues du diagramme de la Figure 4 prises respectivement selon un plan XOY et selon un plan orthogonal au plan XOY et contenant un axe Z ;
- la Figure 7 est une vue schématique en perspective d'un premier exemple de satellite auquel est applicable l'invention ;
- la Figure 8 est une vue schématique en perspective d'un deuxième exemple de satellite auquel est applicable l'invention ;
- la Figure 9 est un diagramme montrant une orbite elliptique et la définition de la zone de poussée autour de la demi-ellipse centrée sur l'apogée ;
- la Figure 10 est un diagramme montrant une orbite elliptique et la définition de la zone de poussée autour de la demi-ellipse centrée sur le périgée ;
- la Figure 11 est un diagramme analogue à celui de la Figure 5 montrant un exemple particulier du procédé selon l'invention appliqué à une mise en orbite géostationnaire selon une méthode dite "similaire" ; et
- la Figure 12 est un diagramme analogue à celui de la Figure 4 montrant un exemple particulier du procédé selon l'invention appliqué à une mise en orbite géostationnaire selon une méthode dite "alternative" ;
- la Figure 13 est un schéma-bloc des circuits de contrôle-commande d'un système selon l'invention ;
- la Figure 14 est un diagramme montrant, dans un système selon l'invention, la possibilité d'orientation de la poussée totale hors du plan orbital en modulant la poussée de l'un des moteurs ; et
- la Figure 15 est un schéma-bloc d'un système selon l'invention utilisant un système propulsif à propulseurs à forte impulsion spécifique du type plasmique à dérive fermée d'électrons.

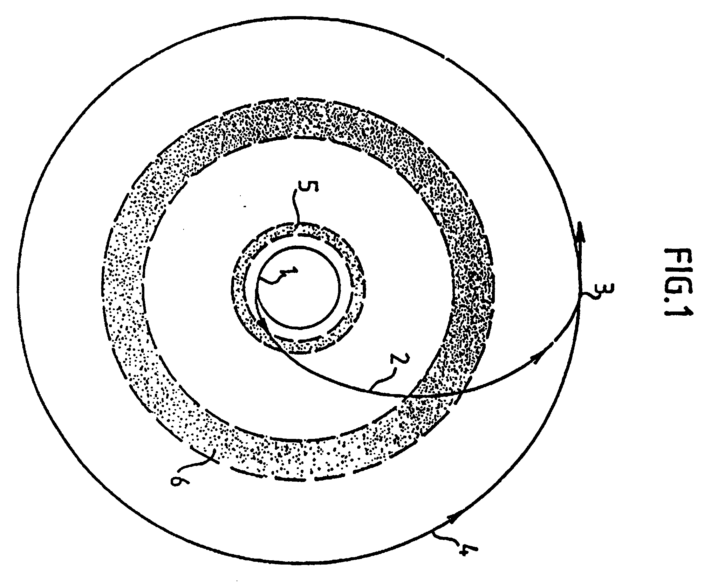

On rappellera tout d'abord en référence aux Figures 1 à 3 trois méthodes classiques déjà proposées pour placer un satellite sur une orbite circulaire.

Sur la Figure 1, qui schématise les différentes manoeuvres de Hohmann, on distingue une phase de lancement 1 durant laquelle la fusée place le satellite sur une orbite basse, puis une phase de transfert 2 durant laquelle le satellite est injecté, grâce à un accroissement de vitesse au périgée, sur une orbite elliptique dont l'apogée correspond à l'altitude finale recherchée et où un second accroissement de vitesse 3 Injecte le satellite sur une orbite circulaire finale 4. Les parties référencées 5 et 6 schématisent les zones de radiations intenses connues sous le nom de ceintures de Van Allen.

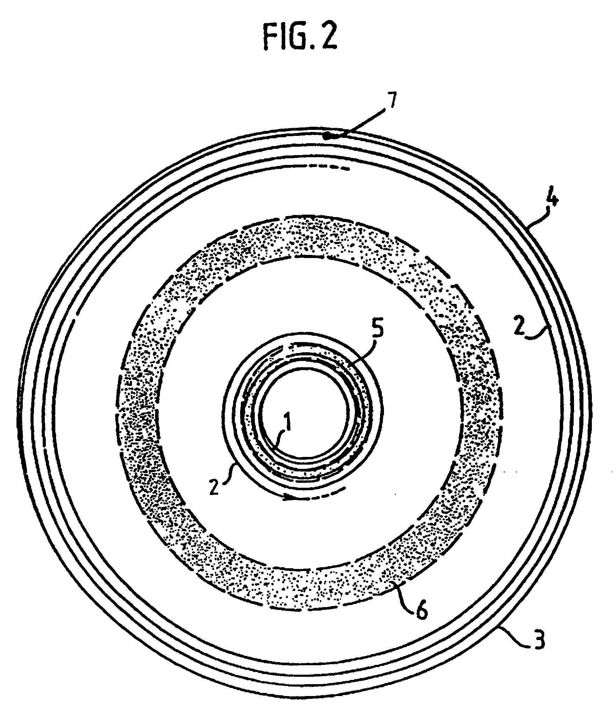

La Figure 2 montre une montée à l'aide d'une trajectoire spiralée grâce à un accroissement de vitesse très faible mais continu. On distingue la phase de lancement 1 en orbite circulaire basse, la phase de transfert 2 qui est constituée par la trajectoire spiralée proprement dite. La référence 7 marque le lieu de la fin du tir spiralé. La référence 3 montre le lieu de la dernière manoeuvre permettant d'injecter le satellite sur l'orbite finale circulaire 4. Les ceintures de Van Allen sont repérées par les références 5 et 6 comme sur la Figure 1.

Les inconvénients des méthodes de changement d'orbite illustrées sur les Figures 1 et 2 ont déjà été exposés plus haut et ne seront pas développés à nouveau.

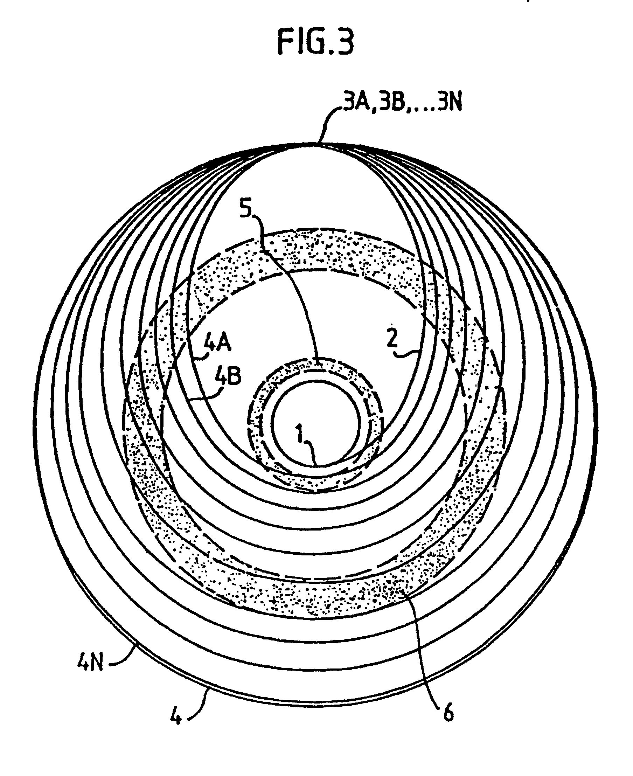

La Figure 3 montre une mise en orbite par application du procédé dit par arcs de poussée.

Après la phase de lancement 1, le satellite est mis sur une première demi-orbite elliptique 2 vers l'apogée de laquelle il est procédé au tir des propulseurs qui délivrent un incrément de vitesse 3A. Le satellite décrit alors une seconde orbite elliptique 4A ayant un périgée nettement plus élevé et un apogée très légèrement plus élevé. Un nouveau tir du propulseur introduit un nouvel incrément de vitesse 3B délivré au nouvel apogée, ce qui place le véhicule sur une nouvelle orbite elliptique 4B ayant un périgée nettement plus élevé et un apogée légèrement plus élevé que celui de la précédente orbite. On procède ainsi de suite jusqu'à l'orbite elliptique 4N dont l'apogée correspond à l'altitude finale recherchée permettant de placer le véhicule sur son orbite circulaire définitive 4.

Comme sur les Figures 1 et 2, les ceintures de Van Allen sont repérées par les références 5 et 6.

Les inconvénients d'un procédé de mise en orbite par la technique des arcs de poussée successifs ont déjà été présentés plus haut et ne seront pas décrits à nouveau.

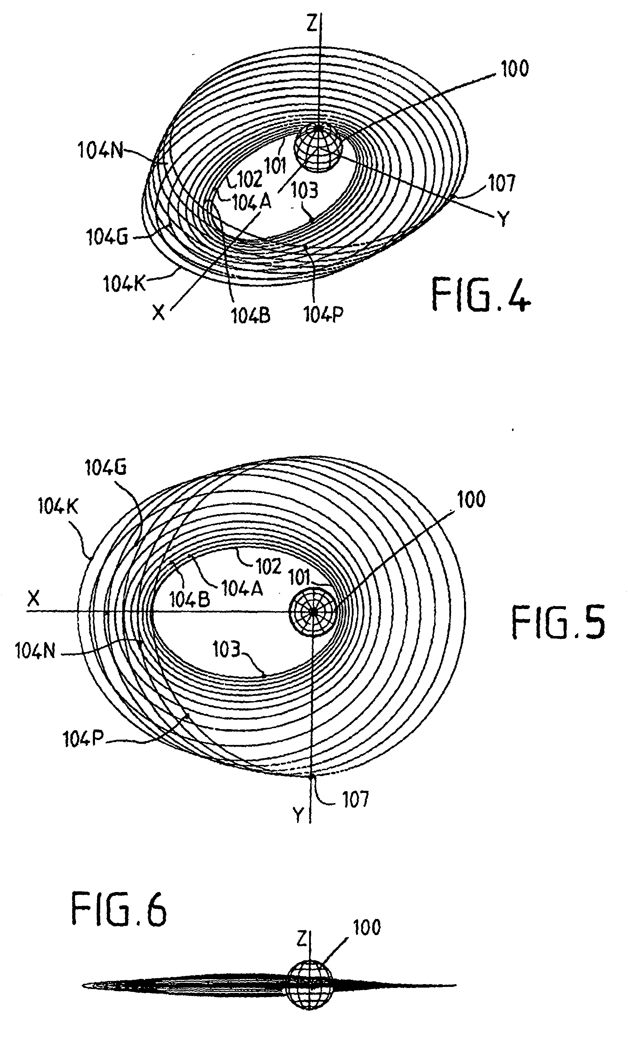

On décrira maintenant un procédé de mise en orbite d'un véhicule spatial, tel qu'un satellite, selon la présente invention, en référence aux Figures 4 à 6.

Après une phase de lancement 101 depuis la Terre 100, à l'aide d'un lanceur un satellite est largué sur une orbite elliptique 102.

Le tir de mise sur orbite finale du satellite peut être effectué soit immédiatement, soit, à la convenance de l'utilisateur, après un certain nombre de révolutions sur l'orbite elliptique de largage 102, lorsque le satellite arrive par exemple au point 103.

Au moment où le transfert du satellite situé au point 103 est décidé, il est procédé au tir d'un ensemble de propulseurs à forte impulsion spécifique du satellite, le nombre de ces propulseurs pouvant le cas échéant être limité à un.

Les propulseurs à forte impulsion spécifique sont commandés selon un fonctionnement continu et l'orientation de leur poussée totale amène alors le satellite à décrire la spirale 104A, 104B,... caractérisée par des orbites intermédiaires successives dont l'altitude d'apogée augmente plus rapidement que l'altitude de périgée.

Lorsque l'altitude d'apogée d'une orbite intermédiaire est suffisante, au point 104G par exemple, les propulseurs sont maintenus en fonctionnement et seule la loi d'orientation de la poussée totale est modifiée pour permettre d'effectuer également une modification d'inclinaison.

Lorsque le satellite décrit la portion 104K de la trajectoire spiralée, les propulseurs sont maintenus en fonctionnement et seule la loi d'orientation de la poussée totale est modifiée de telle sorte que la spirale décrite présente alors à chaque révolution, c'est-à-dire à chaque nouvelle orbite intermédiaire, une diminution d'altitude d'apogée et une augmentation d'altitude de périgée.

Lorsque la modification d'inclinaison recherchée est obtenue, au point 104N par exemple, les propulseurs sont maintenus en fonctionnement et seule la loi d'orientation de la poussée totale est modifiée en alignant la poussée dans le plan orbital, tout en conservant une orientation telle que l'on ait une diminution d'altitude d'apogée et une augmentation d'altitude de périgée.

La spirale se poursuit alors par les orbites intermédiaires 104N, jusqu'à 104P. La fin du fonctionnement des propulseurs est activée au point 107 par exemple, lorsque les altitudes d'apogée et de périgée sont égales ou approximativement égales à celles de l'orbite finale visée.

Comme on le voit dans l'exemple décrit ci-dessus, il peut être avantageux que la modification d'inclinaison de l'orbite ne soit pas effectuée immédiatement lors de l'allumage du ou des propulseurs. Il y a lieu, en effet, au début du tir avec fonctionnement continu des propulseurs, de permettre une augmentation rapide de l'altitude de périgée, de manière à minimiser la durée de traversée des ceintures de Van Allen. Or, cette durée pourrait être allongée si l'on effectuait en supplément une modification d'inclinaison, qui conduirait à réduire la composante de la poussée permettant d'augmenter l'altitude de périgée.

De la même façon, la modification d'inclinaison recherchée peut être achevée au point 104N, avant même que l'orbite finale visée soit atteinte, afin d'optimiser la performance globale, sachant que plus l'altitude d'apogée est élevée, meilleure est l'efficacité du changement d'inclinaison.

Les différentes phases de fonctionnement des propulseurs pendant la trajectoire spiralée peuvent prendre en compte la contrainte de positionnement final du véhicule à son point visé sur l'orbite géostationnaire, ou à sa proximité. De grandes latitudes existent pendant la trajectoire spiralée pour que, au prix d'un éventuel impact de performance mineur, n'importe quel point de l'orbite géostationnaire puisse être atteint à la fin du fonctionnement des propulseurs.

On notera que le procédé selon l'invention présente en particulier l'avantage de pouvoir définir une manoeuvre pendant laquelle un seul allumage des propulseurs peut suffire pour passer d'une orbite initiale à l'orbite finale visée. Naturellement, il est toujours possible d'interrompre momentanément le tir du ou des propulseurs à la convenance de l'utilisateur, pour des raisons autres que la mise sur orbite, par exemple soit pour des opérations de maintenance des propulseurs ou du satellite, soit pour des impératifs d'orbitographie, de télémesure ou de télécommande.

Par ailleurs, les modifications d'inclinaison peuvent être effectuées, dans certaines applications, dès le début du tir des propulseurs ou jusqu'à la fin de leur tir si l'on souhaite par exemple accélérer le positionnement du satellite en final sur l'orbite géostationnaire ou éviter de traverser l'orbite géostationnaire avec une inclinaison nulle.

Comme on le sait, l'apogée et le périgée sont définis comme les distances maximale et minimale par rapport à la Terre atteintes par le véhicule spatial au cours d'une révolution. En général, l'orbite décrite par le satellite possède une forme proche d'une ellipse même lorsque les propulseurs à forte impulsion spécifique sont en fonctionnement, leur poussée étant faible. C'est pourquoi on peut considérer que l'apogée et le périgée en question peuvent être approximativement ceux de l'ellipse osculatrice à la trajectoire orbitale moyenne.

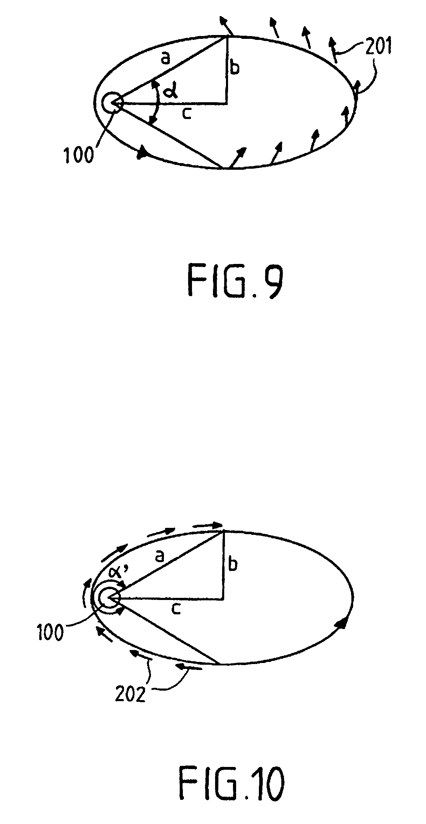

Pour obtenir les effets recherchés lors des phases de fonctionnement correspondant aux portions de trajectoire 104K à 104N, on peut, pendant la demi-ellipse centrée sur l'apogée orienter la poussée dans le plan horizontal local, comme représenté schématiquement sur la Figure 9 et pendant la demi-ellipse centrée sur le périgée, on peut orienter la poussée dans un plan orthogonal au plan orbital et tangent à l'orbite, dans la direction opposée à la vitesse comme représenté schématiquement sur la Figure 10.

Sur les Figures 9 et 10, on a représenté respectivement l'angle $\alpha$ de l'arc de poussée à l'apogée et l'angle $\alpha'$ de l'arc de poussée au périgée. Sur les Figures 9 et 10, on a représenté les paramètres suivants relatifs à l'ellipse :

    a = demi-grand axe
    b = demi-petit axe
    c = distance du foyer au centre de l'ellipse.

L'excentricité de l'ellipse est alors représentée par le rapport c/a.

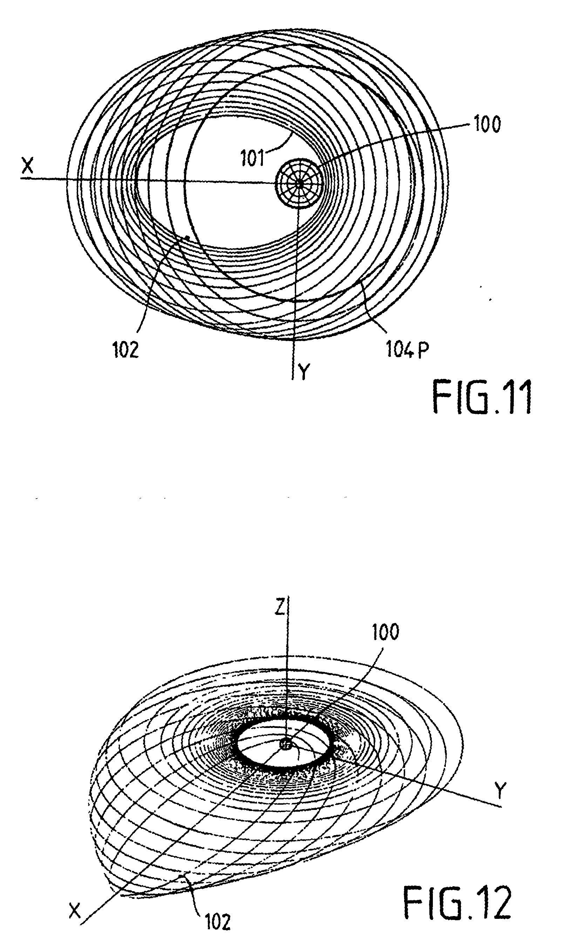

On a représenté en Figure 11 une mise en orbite suivant la méthode dite "similaire". Cette méthode apporte un avantage assez significatif en matière de durée de traversée des ceintures de Van Allen. L'orbite initiale est une orbite 620 km de périgée et 71.000 km d'apogée. Le tir en continu des propulseurs à forte impulsion spécifique débute au voisinage du début de la demi-ellipse dite autour de l'apogée.

La poussée totale est orientée dans le plan horizontal local, de sorte que l'on observe des augmentations d'altitudes de périgée et d'apogée. Puis, dès que l'altitude de périgée dépasse l'altitude 20.000 km (valeur fonction en particulier de l'activité des ceintures de Van Allen), (mais on pourrait aussi prendre une valeur d'altitude de par exemple 8000 km) l'orientation de la poussée est modifiée pour être inertielle (tangente à la vitesse à l'apogée), ce qui a pour effet d'augmenter l'altitude de périgée et de diminuer celle de l'apogée puis, lorsque l'excentricité de l'orbite s'annule, l'orientation de la poussée est modifiée pour être tangente à l'opposé de la vitesse, ce qui a pour effet de diminuer l'altitude de périgée et de diminuer celle de l'apogée. De sorte que, finalement, les altitudes d'apogée et de périgée coïncident avec celle de l'orbite visée, l'orbite géostationnaire. On peut remarquer que le nombre d'orbites traversant les ceintures de Van Allen a été réduit par rapport au cas de la Figure 4.

Sur la Figure 12, on a représenté une mise en orbite suivant la méthode dite "alternative". Cette méthode apporte un avantage assez significatif en matière de durée de traversée des ceintures de Van Allen. L'orbite initiale est une orbite 620 km de périgée et 330.000 km d'apogée. Le tir en continu des propulseurs à forte impulsion spécifique débute au voisinage du début de la demi-ellipse dite autour de l'apogée. La poussée totale est orientée pour être inertielle (tangente à la vitesse à l'apogée), ce qui a pour effet d'augmenter l'altitude de périgée et de diminuer l'altitude de l'apogée.

Puis, lorsque l'excentricité de l'orbite s'annule, l'orientation de la poussée est modifiée pour être dans le plan horizontal local dans le sens opposé de la vitesse, ce qui a pour effet de diminuer l'altitude de périgée et de diminuer celle de l'apogée. De sorte que, finalement, les altitudes d'apogée et de périgée coïncident avec celle de l'orbite visée, l'orbite géostationnaire. On peut noter que le nombre d'orbites traversant les ceintures de Van Allen a été très fortement réduit par rapport au cas de la Figure 4, et réduit par rapport au cas de la Figure 11.

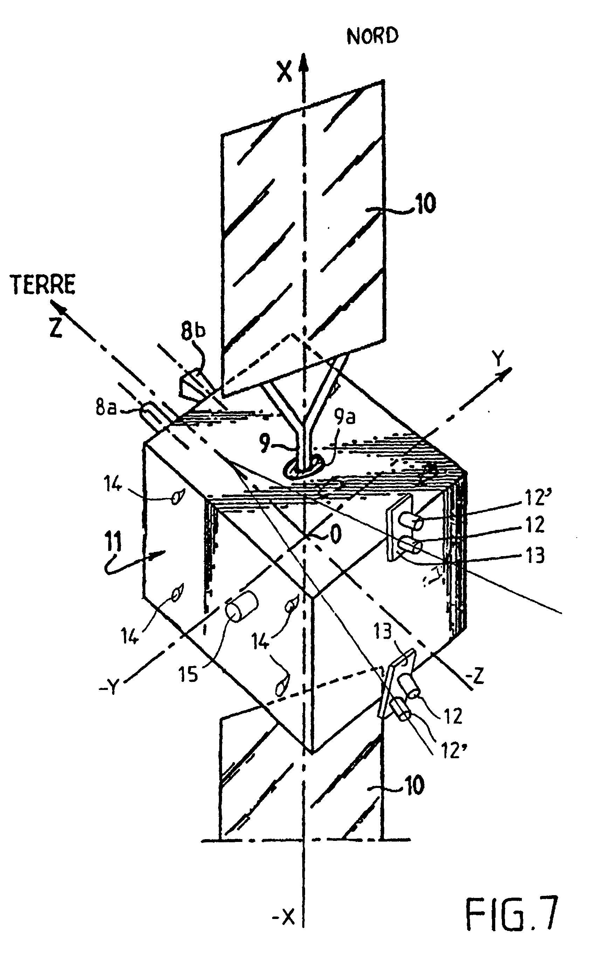

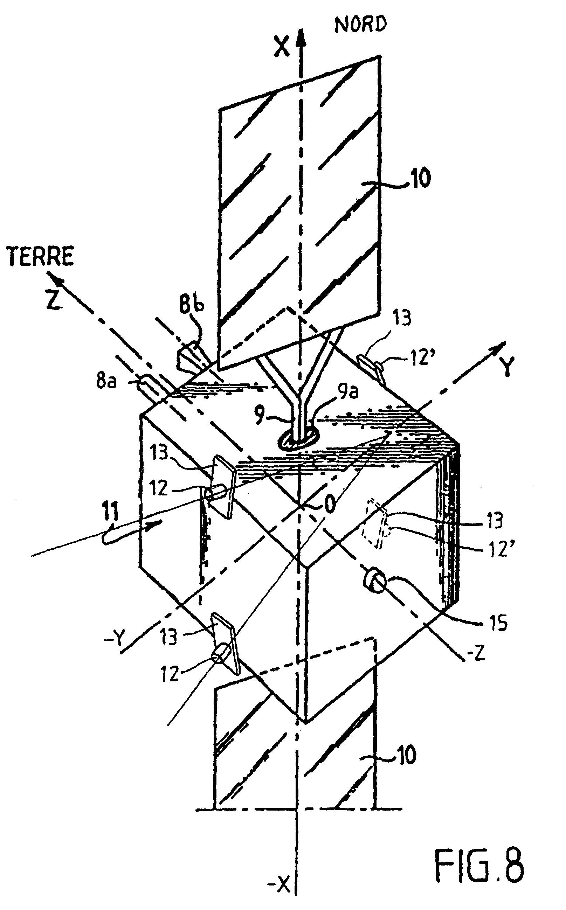

On se référera maintenant aux Figures 7 et 8 qui montrent deux variantes d'un satellite 11 auquel est applicable l'invention. Ce véhicule spatial 11 est équipé de propulseurs 12 à forte impulsion spécifique montés sur des plates-formes, ou embases 13, dont certaines au moins sont orientables. Les propulseurs 12' sont destinés à assurer la redondance pendant la manoeuvre de mise en orbite. D'autres propulseurs auxiliaires 14 utilisant le même produit que les propulseurs 12 et 12' peuvent également être montés sur le corps du satellite 11. Le satellite est équipé de panneaux solaires 10 reliés chacun par une structure 9 à un mécanisme d'entraînement du générateur solaire (MEGS) référencé 9a. Le satellite est représenté avec son axe OZ orienté vers la Terre. Cet axe OZ est pointé vers le centre de la Terre par des senseurs d'horizon infrarouges 8a, ou vers une balise par un détecteur radiofréquence 8b. Des senseurs d'horizon auxiliaires 15 peuvent être implantés sur d'autres faces du corps du satellite 11.

Les propulseurs 12, 12' servent aussi bien à des contrôles d'orbite et d'attitude du satellite durant la vie opérationnelle du véhicule qu'à la manoeuvre de changement d'orbite.

Le système de mise en orbite associé au satellite comprend un dispositif de commande de la mise en fonctionnement du ou des propulseurs de façon continue après le largage du satellite et jusqu'à ce que celui-ci ait atteint son orbite finale visée. Le système comprend en outre un dispositif de commande d'orientation de la poussée agissant soit au niveau des embases orientables, soit au niveau des autres moyens d'orientation dont dispose le satellite (roues cinétiques ou roues d'inertie par exemple). Des moyens sont aussi prévus pour générer une commande de l'orientation telle que, l'orbite de largage étant elliptique de période sidérale différente et par exemple inférieure à celle de l'orbite finale visée:

- en début de manoeuvre, à chaque révolution successive, l'effet du fonctionnement des propulseurs 12 et de leur orientation entraîne une augmentation de l'apogée de l'orbite et une augmentation moindre du périgée de l'orbite,
- en fin de manoeuvre, à chaque révolution successive, l'effet du fonctionnement des propulseurs 12 entraîne une diminution de l'apogée de l'orbite et une augmentation du périgée de l'orbite.

Les moyens prévus pour générer une commande de l'orientation peuvent être également adaptés pour mettre en oeuvre par exemple la méthode alternative décrite plus haut.

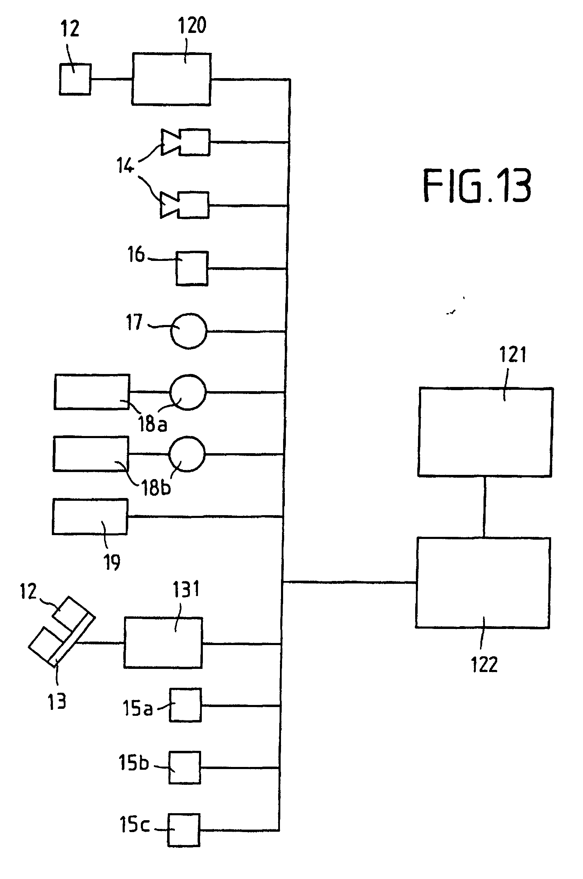

Diverses méthodes d'orientation de la poussée totale peuvent être utilisées par les moyens générant les commandes d'orientation qui sont illustrés schématiquement sur la Figure 13.

Pour orienter la poussée dans un plan horizontal local, le référentiel d'orientation pourra être donné par un senseur d'horizon infrarouge 15a pouvant s'accommoder d'une distance Terre-satellite variable (par exemple un senseur à balayage ou un senseur à matrice CCD). Le contrôle sur le troisième axe (axe de lacet) pourra être obtenu dans le cas général par l'utilisation d'un senseur solaire ou stellaire 18a, 18b, 19. Une précision de pointage à ± 2° est largement suffisante pour assurer la mission.

Pour orienter ensuite la poussée de façon anti-tangentielle à la vitesse orbitale, le satellite effectue une rotation de l'ordre de 180° autour de l'axe Nord/Sud afin d'inverser la direction de la poussée. Il faut alors des senseurs d'horizon auxiliaires 15b, 15c sur deux faces opposées (Est-Ouest). La rotation sera avantageusement obtenue en créant un couple à l'aide de la roue cinétique ou de la roue à réaction 17 disposée selon l'axe Nord/Sud et l'amplitude de la rotation sera mesurée soit par un gyromètre intégrateur 16, soit par des senseurs solaires 18a, 18b.

Pour orienter la poussée selon une direction inertielle, un senseur solaire 18a, 18b ou 18c fournit par exemple une référence d'attitude qui se déplace sensiblement de 1° par jour vis-à-vis des étoiles. Le calculateur de bord 121 calcule l'angle entre le Soleil et la direction souhaitée pour la poussée totale et commande par suite la rotation du satellite (par action sur la roue à inertie 17 par l'intermédiaire du système de commande d'attitude et d'orbite 122) jusqu'à atteindre l'angle souhaité.

Si le senseur solaire est situé sur le panneau solaire 10 (senseurs 18a, 18b), le calculateur 121 commandera l'angle entre les panneaux solaires 10 et le corps du satellite 11 par action sur les mécanismes d'entraînement du générateur solaire (MEGS), alors que le système 122 de commande d'attitude et d'orbite (AOCS) du satellite sera asservi à pointer le panneau vers le Soleil.

Un dépointage volontaire des embases orientables 13 supportant les propulseurs à forte impulsion spécifique 12, 12' permet aussi de créer un couple de contrôle d'attitude.

On a représenté sur la Figure 13 un ensemble de propulseurs à forte impulsion spécifique 12 dont l'allumage est déclenché par un circuit de commande 120, une série de petits propulseurs auxiliaires optionnels 14 utilisant le même produit (par exemple du xénon) que l'ensemble de propulseurs 12, un pyromètre 16, des roues de réaction 17, un senseur solaire 18a de commande d'un mécanisme d'entraînement du générateur solaire Nord, un senseur solaire 18b de commande d'un mécanisme d'entraînement du générateur solaire Sud, un ensemble de senseurs solaires 19 solidaires du corps du satellite 11, des platines 13 de support de propulseurs à forte impulsion spécifique 12, un circuit 131 de commande d'orientation des platines 13, un senseur d'horizon à infrarouge 15a, un calculateur de bord 121 et des Interfaces et actionneurs 122 constituant un système de commande d'attitude et d'orbite.

A titre d'option, on a représenté en outre sur la Figure 13 un senseur d'horizon Est 15b et un senseur d'horizon Ouest 15c.

Pour orienter la poussée totale hors du plan orbital (comme cela est nécessaire lorsque l'on veut modifier l'inclinaison des orbites successives), on peut faire en sorte que le satellite en entier pivote autour de son axe de lacet par exemple (axe OZ de la Figure 8).

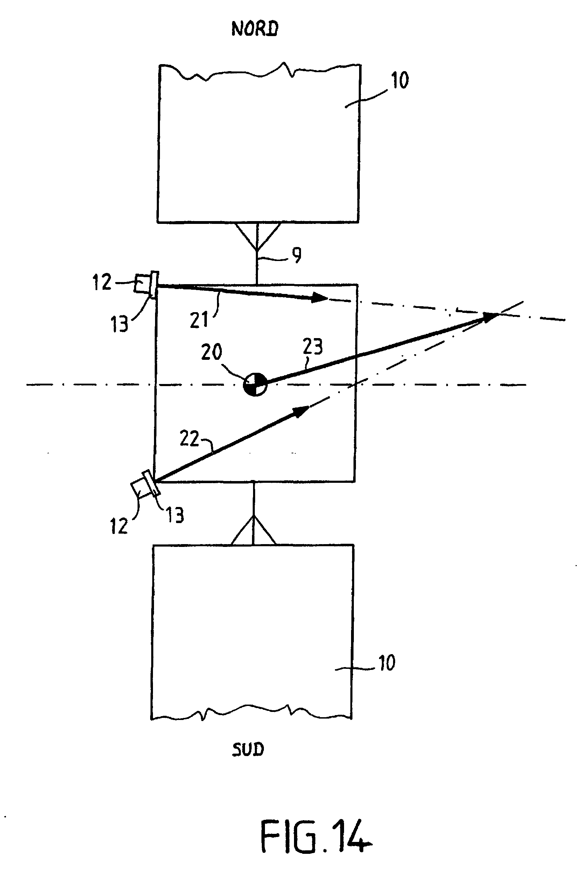

Si, comme sur les Figures 7 et 8, plusieurs, par exemple deux, propulseurs à forte impulsion spécifique sont installés, on peut aussi obtenir l'orientation de la poussée totale avec une composante hors du plan orbital, en orientant de façon adéquate les embases orientables 13 et en modulant l'intensité de la poussée de l'un des deux propulseurs 12, de sorte que, malgré la composante hors du plan orbital, la poussée totale passe par le centre de masse du véhicule. Cette possibilité particulière est schématisée sur la Figure 14. Pour obtenir une poussée totale (vecteur 23) passant par le centre des masses 20 et ayant une composante hors du plan orbital, les embases orientables 13 sont orientées différemment pour les moteurs 12 situés au Nord ou au Sud. La poussée du moteur 12 situé au Nord (vecteur 21) est ajustée de telle sorte que la poussée totale du vecteur 23, qui est égale à la somme vectorielle des vecteurs 21 et 22, passe par le centre des masses 20.

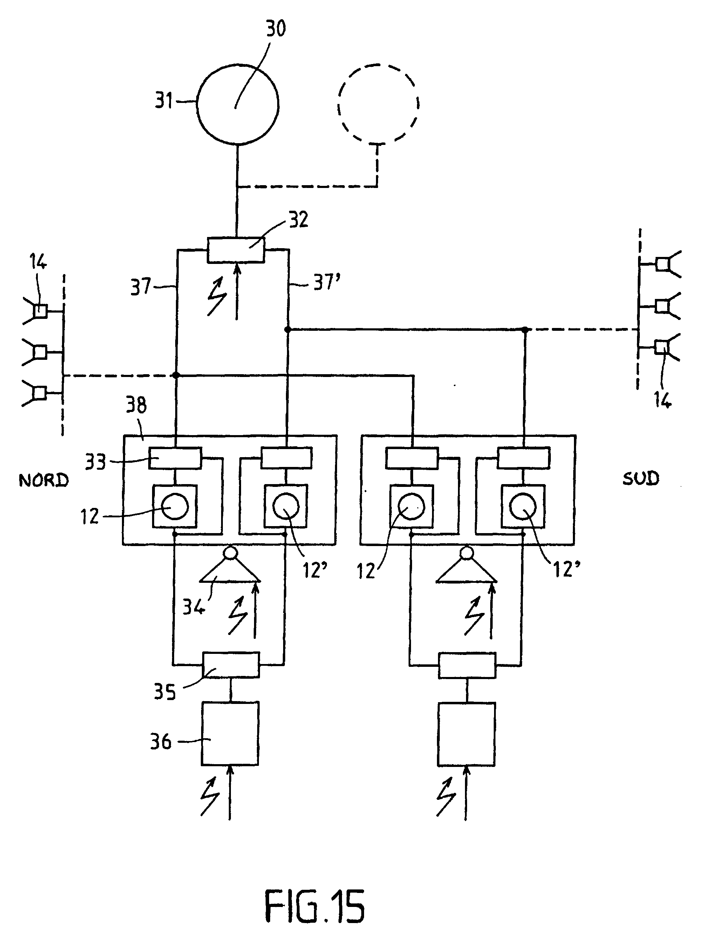

La Figure 15 représente le schéma synoptique d'un système propulsif permettant de réaliser une mise en orbite selon l'invention.

Un ou plusieurs réservoirs 31 d'un produit 30 tel que, par exemple, du xénon, alimente un distributeur 32. Le distributeur 32 peut contenir un système de régulation de pression ou de débit et un ensemble de vannes et de senseurs non représenté. Le distributeur 32 distribue, par les lignes nominale 37 ou redondantes 37', le produit 30 à des contrôleurs de débit 33 qui permettent d'alimenter les propulseurs à forte impulsion spécifique 12 et 12'. Les éventuels propulseurs auxiliaires 14 utilisant le même produit 30 sont alimentés à partir des lignes 37 et 37'.

Les propulseurs 12 et 12' sont alimentés en puissance électrique par l'intermédiaire d'un distributeur électrique 35 pouvant contenir un ensemble de relais à partir d'un module de conditionnement électrique 36 relié directement à la source de puissance électrique du véhicule spatial et à son bus de commande/contrôle.

Chaque embase 38 supportant deux propulseurs 12 et 12' est orientable par rapport au véhicule spatial par actions de commandes sur un dispositif d'orientation 34.

Le système selon l'invention s'applique principalement au cas des transferts entre des orbites de largage elliptiques comme GTO et des orbites finales visées circulaires comme GEO. Mais il peut être également intéressant de rejoindre, à partir d'une orbite de largage elliptique GTO, une autre orbite elliptique, inclinée différemment.

**Revendications**

1. Procédé de mise en orbite pour placer un véhicule spatial (11), tel qu'un satellite, sur une orbite visée telle que celle adaptée à un fonctionnement opérationnel normal du véhicule spatial (11), à partir d'une orbite de largage elliptique (102) sensiblement différente de l'orbite visée et notamment présentant une excentricité différente de celle de l'orbite visée, **caractérisé en ce qu'**on fait décrire au véhicule spatial une trajectoire spiralée composée d'une pluralité d'orbites intermédiaires (104A,... 104P) en un tir continu unique d'un ensemble de propulseurs (12, 12') à forte impulsion spécifique, montés sur le véhicule spatial (11), on contrôle l'évolution de la trajectoire spiralée de telle manière qu'à chaque révolution successive, au moins pendant une première phase de manoeuvre, il se produise une augmentation d'altitude de périgée, une évolution dans un sens déterminé de l'altitude d'apogée et une diminution de l'éventuel écart d'inclinaison d'une orbite intermédiaire par rapport à l'orbite visée, puis, au moins au cours d'une deuxième phase de manoeuvre, les évolutions des altitudes de périgée et d'apogée sont contrôlées individuellement dans des sens prédéterminés constants tandis que l'on continue de réduire l'éventuel écart d'inclinaison d'une orbite intermédiaire par rapport à l'orbite visée jusqu'à ce que les altitudes d'apogée, de périgée et les inclinaisons orbitales d'une orbite intermédiaire du véhicule spatial (11) atteignent sensiblement celles de l'orbite visée.

2. Procédé selon la revendication 1, **caractérisé en ce que**, dans le cas d'un véhicule spatial (11) largué sur une orbite elliptique sensiblement différente de celle de l'orbite finale visée pour un fonctionnement opérationnel normal du véhicule, durant la première phase de la manoeuvre, depuis le début du tir continu des propulseurs (12, 12'), il est réalisé, à chaque révolution successive, une augmentation de l'altitude d'apogée et une augmentation moindre de l'altitude de périgée d'une orbite intermédiaire puis, durant la deuxième phase de la manoeuvre, jusqu'à la fin du tir continu, il est réalisé, à chaque révolution successive, une diminution de l'altitude d'apogée et une augmentation de l'altitude de périgée d'une orbite intermédiaire.

3. Procédé selon la revendication 1, **caractérisé en ce que**, durant la première phase de la manoeuvre, en début de tir continu des propulseurs (12, 12'), il est réalisé, à chaque révolution successive, une augmentation de l'altitude d'apogée et une augmentation de l'altitude de périgée d'une orbite intermédiaire puis, durant la deuxième phase de la manoeuvre, vers le milieu du tir continu, il est réalisé, à chaque révolution successive, une diminution de l'altitude d'apogée et une augmentation de l'altitude de périgée d'une orbite intermédiaire puis, lors d'une troisième phase de la manoeuvre, lorsque l'excentricité d'une orbite intermédiaire du véhicule spatial (11) atteint sensiblement celle de l'orbite visée, en fin de tir continu, il est réalisé, à chaque révolution successive, une diminution de l'altitude d'apogée, une diminution de l'altitude de périgée et toujours une diminution de l'éventuel écart d'inclinaison d'une orbite intermédiaire par rapport à l'orbite visée, jusqu'à ce que les altitudes d'apogée, de périgée et les inclinaisons orbitales d'une orbite intermédiaire du véhicule spatial (11) atteignent sensiblement celles de l'orbite visée.

4. Procédé selon la revendication 1, **caractérisé en ce que**, durant la première phase de la manoeuvre, en début de tir continu des propulseurs (12, 12'), il est réalisé, à chaque révolution successive, une diminution de l'altitude d'apogée et une augmentation de l'altitude de périgée d'une orbite intermédiaire puis, lors de la deuxième phase de la manoeuvre, en fin de tir continu, lorsque l'excentricité d'une orbite intermédiaire du véhicule spatial (11) atteint sensiblement celle de l'orbite visée, il est réalisé, à chaque révolution successive, une diminution de l'altitude d'apogée et une diminution de l'altitude de périgée d'une orbite intermédiaire.

5. Procédé selon l'une quelconque des revendications 1 à 4, **caractérisé en ce qu'**il est appliqué au placement d'un véhicule spatial, tel qu'un satellite, sur une orbite visée à partir d'une orbite de largage elliptique plus excentrique que l'orbite visée.

6. Système de mise en orbite pour placer un véhicule spatial (11), tel qu'un satellite, sur une orbite visée telle que celle adaptée à un fonctionnement opérationnel normal du véhicule spatial (11), à partir d'une orbite de largage elliptique sensiblement différente de l'orbite visée et notamment présentant une excentricité différente de celle de l'orbite visée,
   **caractérisé en ce qu'**il comprend :

   - un ensemble de plates-formes (13) montées sur le véhicule spatial (11),
   - un ensemble de propulseurs (12, 12') montés sur lesdites plates-formes et présentant une forte impulsion spécifique supérieure à 5000 Ns/kg et une faible poussée, inférieure à 10 N, pour créer une force de poussée totale appliquée au véhicule spatial,
   - un dispositif de commande (120) de mise en fonctionnement des propulseurs de façon continue après le largage du véhicule spatial pour permettre à ce véhicule spatial d'atteindre, par une trajectoire spiralée totale (104A,...104P), aux éventuelles interruptions de servitude près, une orbite visée, et d'achever le tir des propulseurs lorsque les altitudes d'apogée, de périgée et les inclinaisons orbitales d'une orbite intermédiaire du véhicule spatial sont sensiblement égales à celles de l'orbite visée,
   - un dispositif (121, 122, 131) de commande d'orientation de la poussée comprenant au moins des premiers moyens pour générer, pendant une première phase de tir continu de l'ensemble des propulseurs (12, 12'), une première commande d'orientation de la poussée totale conduisant, à chaque révolution successive du véhicule spatial, pour chaque orbite intermédiaire, à une évolution dans un sens déterminé de l'altitude d'apogée, à une augmentation de l'altitude de périgée, et à une diminution de l'éventuel écart d'inclinaison d'une orbite intermédiaire par rapport à l'orbite visée, et au moins des seconds moyens pour générer, pendant une deuxième phase de tir de l'ensemble des propulseurs (12, 12'), une deuxième commande d'orientation de la poussée totale conduisant, à chaque révolution successive du véhicule spatial (11), pour chaque orbite intermédiaire, à des évolutions de l'altitude d'apogée et de l'altitude de périgée contrôlées individuellement dans des sens prédéterminés constants et à une diminution de l'éventuel écart d'inclinaison d'une orbite intermédiaire par rapport à l'orbite visée.

7. Système selon la revendication 6, **caractérisé en ce que** les premiers moyens du dispositif (121, 122, 131) de commande d'orientation de la poussée sont adaptés pour générer pendant une première phase de tir continu de l'ensemble des propulseurs (12, 12'), une première commande d'orientation de la poussée totale conduisant, à chaque révolution successive du véhicule spatial, pour chaque orbite intermédiaire à une augmentation de l'altitude d'apogée, à une augmentation moindre de l'altitude de périgée, et à une diminution de l'éventuel écart d'inclinaison d'une orbite intermédiaire par rapport à l'orbite visée et **en ce que** les seconds moyens du dispositif (121, 122, 131) de commande d'orientation de la poussée sont adaptés pour générer, pendant une deuxième phase de tir de l'ensemble des propulseurs (12, 12'), une deuxième commande d'orientation de la poussée totale conduisant, à chaque révolution successive du véhicule spatiale (11), pour chaque orbite intermédiaire, à une diminution de l'altitude d'apogée, à une augmentation de l'altitude de périgée et à une diminution de l'éventuel écart d'inclinaison d'une orbite intermédiaire par rapport à l'orbite visée.

8. Système selon la revendication 6 ou la revendication 7, **caractérisé en ce que** l'ensemble de propulseurs (12, 12') présentant une forte impulsion spécifique comprend des propulseurs du type plasmique à dérive fermée d'électrons, des propulseurs ioniques ou des propulseurs du type Arcjet.

9. Système selon l'une quelconque des revendications 6 à 8, **caractérisé en ce que** lesdits premiers et seconds moyens pour générer les première et deuxième commandes d'orientation de la poussée totale comprennent un ensemble de senseurs (15, 18a, 18b, 19) permettant de vérifier ou contrôler l'attitude du véhicule spatial (11).

10. Système selon l'une quelconque des revendications 6 à 9, **caractérisé en ce que** lesdits premiers moyens dudit dispositif de commande d'orientation de la poussée comprennent des moyens d'alignement de la poussée totale dans un plan horizontal local, principalement orienté dans le sens de la vitesse du véhicule spatial.

11. Système selon la revendication 6 ou la revendication 7, **caractérisé en ce que** lesdits seconds moyens dudit dispositif de commande d'orientation de la poussée comprennent des moyens d'alignement de la poussée totale autour de l'apogée dans un plan horizontal local, principalement orienté dans le sens de la vitesse du véhicule spatial, et des moyens d'alignement de la poussée totale autour du périgée selon la direction opposée à la vitesse orbitale du véhicule spatial, et dans un plan sensiblement orthogonal au plan orbital.

12. Système selon la revendication 6 ou la revendication 7, **caractérisé en ce que** lesdits premiers moyens et lesdits seconds moyens dudit dispositif de commande d'orientation de la poussée comprennent des moyens d'alignement de la poussée dans un plan passant selon des directions fixes ou quasi fixes dans l'espace et passant par une quasiperpendiculaire au plan tangent orbital.

13. Système selon la revendication 11, **caractérisé en ce que** lesdits moyens d'alignement de la poussée totale autour de l'apogée orientent la poussée totale sensiblement sur la demi-ellipse osculatrice centrée sur l'apogée.

14. Système selon la revendication 11 **caractérisé en ce que** lesdits moyens d'alignement de la poussée totale autour du périgée orientent la poussée totale sensiblement sur la demi-ellipse osculatrice centrée sur le périgée.

15. Système selon l'une quelconque des revendications 6 à 14, **caractérisé en ce qu'**il comprend des moyens d'orientation de la poussée totale constitués par des moyens propres au véhicule spatial tels que des roues à inertie (17) d'un système de contrôle d'attitude du véhicule spatial.

16. Système selon l'une quelconque des revendications 6 à 14, **caractérisé en ce qu'**il comprend des moyens d'orientation de la poussée totale constitués par au moins certaines desdites plates-formes de support de l'ensemble de propulseurs (12, 12'), lesquelles plates-formes (13) sont orientables.

17. Système selon la revendication 16, **caractérisé en ce que** lesdites plates-formes (13) orientables présentent une capacité d'orientation supérieure à 10° au moins suivant un axe.

18. Système selon la revendication 16, **caractérisé en ce qu'**il comprend des moyens d'orientation de la poussée totale comprenant des moyens de pointage différentiel desdites plates-formes orientables (13) et des moyens d'asservissement de la poussée de chaque propulseur (12, 12') d'une valeur prédéterminée permettant de réaliser une poussée totale passant par le centre de masse (20) du véhicule spatial présentant une composante hors du plan orbital.

19. Système selon l'une quelconque des revendications 6 à 18, **caractérisé en ce que** lesdits propulseurs (12, 12') présentant une forte impulsion spécifique constituent en outre des moyens de contrôle d'attitude et d'orbite du véhicule spatial tel qu'un satellite.

## Patentansprüche

1. Verfahren zum Plazieren eines Raumfahrzeugs (11), beispielsweise eines Satelliten, auf einer Ziel-Umlaufbahn, so z.B. einer Umlaufbahn, die für die normale Arbeitsweise des Raumfahrzeugs (11) geeignet ist, ausgehend von einer elliptischen Anfangsumlaufbahn (102), die etwas verschieden ist von der Zielumlaufbahn und insbesondere eine andere Exzentrizität als diese Zielumlaufbahn besitzt, **dadurch gekennzeichnet, daß** man das Raumfahrzeug mit einer einzelnen Dauerzündung einer Gruppe von hochspezifischen Kraftpulstriebwerken (12, 12'), die an dem Raumfahrzeug (11) angebracht sind, eine spiralförmige Bahn aus einer Mehrzahl von Zwischenumlaufbahnen (104A... 104P) beschreiben läßt, daß man den Verlauf der spiralförmigen Bahn in der Weise steuert, daß bei jedem aufeinanderfolgenden Umlauf sich zumindest während einer ersten Phase des Manövers eine Steigerung der Höhe in Erdnähe, eine Entwicklung der Höhe in Erdferne in einer bestimmten Richtung und eine Verringerung der eventuellen Abweichung der Neigung einer Zwischenumlaufbahn bezüglich der Zielumlaufbahn ergibt, anschließend zumindest im Zuge einer zweiten Phase des Manövers, die Entwicklungen der Höhen in Erdnähe und in Erdferne individuell in vorbestimmten konstanten Richtungen gesteuert werden, während man damit fortfährt, die eventuelle Neigungsabweichung einer Zwischenumlaufbahn bezüglich der Zielumlaufbahn zu verringern, bis die Höhen der Erdferne und der Erdnähe sowie die Umlaufbahn-Neigungen einer Zwischenumlaufbahn des Raumfahrzeugs (11) im wesentlichen die entsprechenden Werte der Zielumlaufbahn erreichen.

2. Verfahren nach Anspruch 1, **dadurch gekennzeichnet, daß** dann, wenn ein Raumfahrzeug (11) auf einer elliptischen Umlaufbahn ausgesetzt wird, die sich etwas von der endgültigen Zielumlaufbahn unterscheidet, die für einen Normalbetrieb des Raumfahrzeugs vorgesehen ist, während der ersten Phase des Manövers nach dem Beginn der Dauerzündung der Triebwerke (12, 12') bei jeder aufeinanderfolgenden Umdrehung eine Erhöhung der erdfernen Höhe und eine geringere Erhöhung der erdnahen Höhe einer Zwischenumlaufbahn erfolgen, dann, während der zweiten Phase des Manövers bis zum Ende der Dauerzündung, bei jedem aufeinanderfolgenden Umlauf eine Verringerung der erdfernen Höhe und eine Erhöhung der erdnahen Höhe einer Zwischenumlaufbahn vorgenommen werden.

3. Verfahren nach Anspruch 1, bei dem während der ersten Phase des Manövers zu Beginn der Dauerzündung der Triebwerke (12, 12') bei jedem aufeinanderfolgenden Umlauf eine Erhöhung der erdfernen Höhe und eine Erhöhung der erdnahen Höhe einer Zwischenumlaufbahn erfolgen, dann, während der zweiten Phase des Manövers etwa in der Mitte der Dauerzündung bei jedem aufeinanderfolgenden Umlauf eine Verminderung der erdfernen Höhe und eine Vergrößerung der erdnahen Höhe einer Zwischenumlaufbahn erfolgen, dann, während einer dritten Phase des Manövers, wenn die Exzentrizität einer Zwischenumlaufbahn des Raumfahrzeugs (11) in etwa diejenige der Zielumlaufbahn erreicht, am Schluß der Dauerzündung bei jedem aufeinander folgenden Umlauf eine Verringerung der erdfernen Höhe, eine Verringerung der erdnahen Höhe und immer noch eine Verminderung der eventuellen Neigungsabweichung einer Zwischenumlaufbahn bezüglich der Zielumlaufbahn erfolgen, bis die erdfernen Höhen, die erdnahen Höhen und die Umlaufbahn-Neigungen einer Zwischenumlaufbahn des Raumfahrzeugs (11) in etwa die entsprechenden Werte der Zielumlaufbahn erreichen.

4. Verfahren nach Anspruch 1, **dadurch gekennzeichnet, daß** während der ersten Phase des Manövers zu Beginn der Dauerzündung der Triebwerke (12, 12') bei jedem aufeinander folgenden Umlauf eine Verminderung der erdfernen Höhe und eine Erhöhung der erdnahen Höhe einer Zwischenumlaufbahn erfolgen, dann, während der zweiten Phase des Manövers und am Ende der Dauerzündung, wenn die Exzentrizität einer Zwischenumlaufbahn des Raumfahrzeugs (11) in etwa diejenige der Zielumlaufbahn erreicht, bei jedem aufeinander folgenden Umlauf eine Verminderung der erdfernen Höhe und eine Verminderung der erdnahen Höhe einer Zwischenumlaufbahn erfolgen.

5. Verfahren nach einem der Ansprüche 1 bis 4, **dadurch gekennzeichnet, daß** es angewendet wird beim Plazieren eines Raumfahrzeugs, beispielsweise eines Satelliten, auf einer Zielumlaufbahn ausgehend von einer elliptischen Anfangsumlaufbahn, die stärker exzentrisch ist als die Zielumlaufbahn.

6. System zum Plazieren eines Raumfahrzeugs (11) beispielsweise eines Satelliten, auf einer Zielumlaufbahn, beispielsweise einer Umlaufbahn, die sich für die normale Betriebsweise des Raumfahrzeugs (11) eignet, ausgehend von einer elliptischen Anfangsumlaufbahn, die sich etwas von der Zielumlaufbahn unterscheidet, und die insbesondere eine andere Exzentrizität als die Zielumlaufbahn besitzt, **dadurch gekennzeichnet, daß** das System aufweist:

- eine Gruppe von Gestellen (13), die an dem Raumfahrzeug (11) gehaltert sind,
- eine Gruppe von Triebwerken (12, 12'), die an den Gestellen gehaltert sind und eine spezifische Pulskraft von über 5000 Ns/kg und einen geringen Schub von unterhalb 10 N aufweisen, um eine Gesamtschubkraft zu bilden, die auf das Raumfahrzeug einwirkt,
- eine Steuervorrichtung (120) zum Betreiben der Triebwerke in kontinuierlicher Weise nach dem Aussetzen des Raumfahrzeugs, damit dieses Raumfahrzeug über eine spiralförmige Gesamtbahn (104A...104P) bei möglichen Unterbrechungen des Grundbetriebs eine Zielumlaufbahn erreichen kann, und zum Beenden der Zündung der Triebwerke dann, wenn die erdferne Höhen, die erdnahen Höhen und die Umlaufbahn-Neigungen einer Zwischenumlaufbahn des Raumfahrzeugs im wesentlichen gleich mit den entsprechenden Werten der Zielumlaufbahn sind,
- eine Vorrichtung (121, 122, 131) zur Steuerung der Schubrichtung, umfassend mindestens eine erste Vorrichtung, die während einer ersten Phase der Dauerzündung der Gruppe von Triebwerken (12, 12') eine erste Richtungssteuerung des Gesamtschubs erzeugt, welcher bei jedem aufeinanderfolgenden Umlauf des Raumfahrzeugs für jede Zwischenumlaufbahn eine Entwicklung der erdfernen Höhe in einer vorbestimmten Richtung, eine Erhöhung der erdnahen Höhe und eine Verminderung der möglichen Neigungsabweichung einer Zwischenumlaufbahn bezüglich der Zielumlaufbahn bewirkt, und mindestens eine zweite Einrichtung, um während einer zweiten Phase der Zündung der Gruppe von Triebwerken (12, 12') eine zweite Richtungssteuerung des Gesamtschubs zu erzeugen, die bei jedem aufeinander folgenden Umlauf des Raumfahrzeugs (11) für jede Zwischenumlaufbahn Entwicklungen der erdfernen Höhe und der erdnahen Höhe, die individuell in vorbestimmten konstanten Richtungen gesteuert sind, bewirken, außerdem eine Verringerung der möglichen Neigungsabweichung einer Zwischenumlaufbahn im Bezug auf die Zielumlaufbahn.

7. System nach Anspruch 6, **dadurch gekennzeichnet, daß** die erste Einrichtung der Vorrichtung (121, 122, 131) zur Schub-Richtungssteuerung dazu ausgebildet ist, während einer ersten Phase der Dauerzündung der Gruppe von Triebwerken (12, 12') eine erste Richtungssteuerung für den Gesamtschub zu erzeugen, die bei jedem aufeinander folgenden Umlauf des Raumfahrzeugs für jede Zwischenumlaufbahn zu einer Vergrößerung der erdfernen Höhe, zu einer schwächeren Vergrößerung der erdnahen Höhe und zu einer Minderung der möglichen Neigungsabweichung einer Zwischenumlaufbahn bezüglich der Zielumlaufbahn führt, und daß die zweite Einrichtung der Vorrichtung (121, 122 131) zur Schub-Richtungssteuerung dazu ausgebildet ist, während einer zweiten Phase der Zündung der Gruppe von Triebwerken (12, 12') eine zweite Richtungssteuerung für den Gesamtschub zu erzeugen, die bei jedem aufeinander folgenden Umlauf des Raumfahrzeugs (11) für jede Zwischenumlaufbahn zu einer Verringerung der erdfernen Höhe, zu einer Erhöhung der erdnahen Höhe und zu einer Verringerung der möglichen Neigungsabweichung einer Zwischenumlaufbahn in Bezug auf die Zielumlaufbahn führt.

8. System nach Anspruch 6 oder Anspruch 7, **dadurch gekennzeichnet, daß** die Gruppe von Antrieben (12, 12'), die einen spezifischen Kraftimpuls aufweisen, Plasmatriebwerke mit geschlossener Elektronendrift, Ionentriebwerke, oder Arcjet-Triebwerke aufweisen.

9. System nach einem der Ansprüche 6 bis 8, **dadurch gekennzeichnet, daß** die erste und die zweite Einrichtung zum Erzeugen der ersten und der zweiten Richtungssteuerung des Gesamtschubs eine Gruppe von Sensoren (15, 18a, 18b, 19) aufweisen, die ein Verifizieren oder Überwachen der Lage des Raumfahrzeugs (11) ermöglichen.

10. System nach einem der Ansprüche 6 bis 9, **dadurch gekennzeichnet, daß** die erste Einrichtung der Vorrichtung zur Richtungssteuerung des Schubs eine Einrichtung zum Ausrichten des Gesamtschubs in einer horizontalen lokalen Ebene aufweist, die vornehmlich in der Geschwindigkeitsrichtung des Raumfahrzeugs orientiert ist.

11. System nach Anspruch 6 oder Anspruch 7, **dadurch gekennzeichnet, daß** die zweite Einrichtung der Vorrichtung zur Richtungssteuerung des Vorschubs eine Einrichtung aufweist zum Ausrichten des Gesamtschubs im erdfernen Bereich in einer lokalen horizontalen Ebene, vornehmlich in der Geschwindigkeitsrichtung des Raumfahrzeugs orientiert, weiterhin eine Einrichtung zum Ausrichten des Gesamtschubs im erdnahen Bereich gemäß der Richtung, die der Umlaufgeschwindigkeit des Raumfahrzeugs entgegengesetzt ist, und in einer Ebene, die im wesentlichen orthogonal zu der Umlaufbahn-Ebene ist.

12. System nach Anspruch 6 oder Anspruch 7, **dadurch gekennzeichnet, daß** die erste Einrichtung und die zweite Einrichtung der Richtungssteuerungs-Vorrichtung für den Schub eine Einrichtung aufweist zum Ausrichten des Schubs in einer Ebene, die in fixen Richtungen oder quasi-fixen Richtungen im Raum verläuft und durch eine Quasi-Senkrechte bezüglich der Umlaufbahn-Tangentialebene verläuft.

13. System nach Anspruch 11, **dadurch gekennzeichnet, daß** die Einrichtung zum Ausrichten des Gesamtschubs im erdfernen Bereich den Gesamtschub im wesentlichen auf einer Schmiegungs-Halbellipse orientiert, die auf die Erdferne zentriert ist.

14. System nach Anspruch 11, **dadurch gekennzeichnet, daß** die Einrichtung zum Ausrichten des Gesamtschubs um die Erdnähe den Gesamtschub etwa auf eine Schmiegungs-Halbellipse orientiert, die auf die Erdnähe zentriert ist.

15. System nach einem der Ansprüche 6 bis 14, **dadurch gekennzeichnet, daß** es eine Orientierungseinrichtung für den Gesamtschub aufweist, die durch eigene Mittel des Raumfahrzeugs gebildet wird, so z.B. Schwungrädern (17) eines Systems zum Halten der Lage des Raumfahrzeugs.

16. System nach einem der Ansprüche 6 bis 14, **dadurch gekennzeichnet, daß** die Einrichtung zum Orientieren des Gesamtschubs gebildet wird durch mindestens einige der Gestelle zum Haltern der Gruppe von Triebwerken (12, 12'), wobei die Gestelle (13) orientierbar sind.

**17.** System nach Anspruch 16, **dadurch gekennzeichnet, daß** die orientierbaren Gestell (13) ein Orientierungsvermögen von mehr als 10 ° zumindest in einer Achse aufweisen.

**18.** System nach Anspruch 16, **dadurch gekennzeichnet, daß** die Einrichtung zum Orientieren des Gesamtschubs eine Einrichtung aufweist zum differenziellen Lenken der orientierbaren Gestelle (13), und eine Einrichtung zur Regelung des Schubs aus jedem Triebwerk (12, 12') auf einen vorbestimmten Wert, wodurch ein Gesamtschub realisierbar ist, der durch die Mitte der Masse (20) des Raumfahrzeugs geht und eine Komponente besitzt, die außerhalb der Umlaufbahnebene liegt.

**19.** System nach einem der Ansprüche 6 bis 18, **dadurch gekennzeichnet, daß** die Triebwerke (12, 12') mit einem spezifischen Kraftpuls außerdem eine Einrichtung bilden, mit der die Lage und die Umlaufbahn des Raumfahrzeugs, z.B. eines Satelliten, gehalten werden.

**Claims**

**1.** A method of placing a space vehicle (11), such as a satellite, on a target orbit such as that adapted to normal operation of the space vehicle (11) and starting from an elliptical initial orbit (102) that is substantially different from the target orbit and in particular has eccentricity that is different from that of the target orbit,

the method being **characterised in that** the space vehicle is caused to describe a spiral trajectory made up of a plurality of intermediate orbits (104A, ...104P) during single continuous firing of a set of high specific impulse thrusters (12, 12') mounted on the space vehicle (11), progress of the spiral trajectory being controlled in such a manner that on each successive revolution, at least during a first stage of the manoeuvre, perigee altitude increases, apogee altitude moves in a determined direction, and any difference in inclination between an intermediate orbit and the target orbit decreases, then, at least during a second stage of the manoeuvre, changes in perigee and apogee altitude are controlled individually in constant predetermined directions while any difference in inclination of an intermediate orbit relative to the target orbit continues to be reduced until the apogee altitude, the perigee altitude, and the orbital inclinations of an intermediate orbit of the space vehicle (11) have reached substantially the values of the target orbit.

**2.** A method according to claim 1, **characterised in that** for a space vehicle (11) initially on an elliptical orbit that is substantially different from the target final orbit for normal operation of the vehicle, during the first stage of the manoeuvre starting from the beginning of continuous firing of the thrusters (12, 12'), and on each successive revolution, apogee altitude of an intermediate orbit is caused to increase and perigee altitude of an intermediate orbit to increase to a lesser extent, and during the second stage of the manoeuvre, until the end of continuous firing, on each successive revolution, apogee altitude of an intermediate orbit is decreased while perigee altitude of an intermediate orbit is increased.

**3.** A method according to claim 1, **characterised in that** during the first stage of the manoeuvre, from the beginning of continuous firing of the thrusters (12, 12'), and on each successive revolution, apogee altitude of an intermediate orbit is increased and so is perigee altitude, then, during a second stage of the manoeuvre, near the middle of continuous firing, and on each successive revolution, apogee altitude of an intermediate orbit is decreased and perigee altitude of an intermediate orbit is increased, and then during a third stage of the manoeuvre, once the eccentricity of an intermediate orbit of the space vehicle (11) has substantially reached that of the target orbit, and until the end of continuous firing, during each successive revolution, apogee altitude is decreased and perigee altitude is decreased while any difference of inclination of an intermediate orbit relative to the target orbit continues to be reduced, until apogee altitude, perigee altitude, and orbital inclination of an intermediate orbit of the space vehicle (11) have reached substantially the values of the target orbit.

**4.** A method according to claim 1, **characterised in that** during the first stage of the manoeuvre starting from the beginning of continuous firing of the thrusters (12, 12'), and on each successive revolution, apogee altitude of an intermediate orbit is decreased and of an intermediate orbit perigee altitude is increased, and then during the second stage of the manoeuvre, until the end of continuous firing, once the eccentricity of an intermediate orbit of the space vehicle (11) has reached substantially that of the target orbit, and on each successive revolution, apogee altitude of an intermediate orbits is decreased and perigee altitude of an intermediate orbit is also decreased.

**5.** A method according to any one of claims 1 to 4, **characterised in that** it is applied to placing a space vehicle, such as a satellite, on a target orbit starting from an elliptical initial orbit more eccentric than the target orbit.

**6.** A system for placing a space vehicle (11), such as a satellite, on a target orbit such as that adapted to normal operation of the space vehicle (11) and starting from an elliptical initial orbit that differs substantially from the target orbit, and in particular that has eccentricity that is different from that of the target orbit,
the system being **characterised in that** it comprises:

· a set of platforms (13) mounted on the space vehicle (11);
· a set of thrusters (12, 12') mounted on said platforms and having high specific impulse, greater than 5000 Ns/kg, and low thrust, less than 10 N, to create a total thrust force applied to the space vehicle;
· a control device (120) for putting the thrusters into continuous operation after the space vehicle has been placed on its initial orbit so as to enable said space vehicle to reach a target orbit via a completely spiral trajectory (104A, ... 104P), ignoring possible service interruptions, and to stop the thrusters firing when the apogee altitude, the perigee altitude, and the orbital inclination of an intermediate orbit of the space vehicle are substantially equal to the values of the target orbit; and
· a thrust direction control device (121, 122, 131) comprising at least first means for operating, during a first stage of continuous firing of the set of thrusters (12, 12'), to generate first control signals for aiming total thrust such that on each successive revolution of the space vehicle and in each intermediate orbit, apogee altitude moves in a determined direction, perigee altitude increases, and any difference in the inclination of the intermediate orbit relative to the target orbit is decreased, and at least second means for operating, during a second stage of the set of thrusters (12, 12') firing, to generate second control signals for aiming total thrust such that on each successive revolution of the space vehicle (11) and in each intermediate orbit, changes in perigee and apogee altitudes are controlled individually in constant predetermined directions and any difference of inclination between the intermediate orbit and the target orbit decreases.

7.  A system according to claim 6, **characterised in that** the first means of the thrust direction control device (121, 122, 131) are adapted to operate, during a first stage of continuous firing of the set of thrusters (12, 12'), to generate first control signals for aiming total thrust such that on each successive revolution of the space vehicle and in each intermediate orbit, apogee altitude increases, perigee altitude increases to a lesser extent, and any difference in the inclination of the intermediate orbit relative to the target orbit is decreased, and **in that** at least the second means of the thrust direction control device (121, 122, 131) are adapted to operate, during a second stage of the set of thrusters (12, 12') firing, to generate second control signals for aiming total thrust such that on each successive revolution of the space vehicle (11) and in each intermediate orbit, apogee altitude decreases, perigee altitude increases, and any difference of inclination between the intermediate orbit and the target orbit decreases.

8.  A system according to claim 6 or claim 7, **characterised in that** the set of thrusters (12, 12') having high specific impulse comprises plasma type closed electron drift thrusters, ion thrusters, or Arcjet type thrusters.

9.  A system according to any one of claims 6 to 8, **characterised in that** said first and second means for generating the first and second control signals for aiming total thrust include a set of sensors (15, 18a, 18b, 19) enabling the attitude of the space vehicle (11) to be verified or checked.

10. A system according to any one of claims 6 to 9, **characterised in that** said first means of said device for controlling thrust aiming include means for aligning total thrust in a local horizontal plane, mainly directed in the direction of the speed of the space vehicle.

11. A system according to claim 6 or claim 7, **characterised in that** said second means of said device for controlling thrust aiming comprise means for operating around apogee to bring the total thrust into alignment in a local horizontal plane mainly with the speed direction of the space vehicle, and means for operating around perigee to bring the total thrust into alignment with a direction opposite to the orbital speed of the space vehicle in a plane that is substantially orthogonal to the orbital plane.

12. A system according to claim 6 or claim 7, **characterised in that** said first means and said second means of said device for controlling thrust aiming include means for aligning thrust in a plane passing via directions that are fixed or almost fixed in space and passing almost perpendicularly to the plane that is tangential to the orbit.

13. A system according to claim 11, **characterised in that** said means for operating around apogee to align total thrust serve to aim total thrust substantially along the osculating half-ellipse centred on apogee.

14. A system according to claim 11, **characterised in**

**that** said means for operating around perigee to align total thrust serve to aim total thrust substantially on the osculating half-ellipse centred on perigee.

15. A system according to any one of claims 6 to 14, **characterised in that** it includes means for aiming total thrust that are constituted by means belonging to the space vehicle such as inertia wheels (17) of a system for controlling the attitude of the space vehicle.

16. A system according to any one of claims 6 to 14, **characterised in that** it includes means for aiming total thrust constituted by at least some of said platforms for supporting sets of thrusters (12, 12'), said platforms (13) being steerable.

17. A system according to claim 16, **characterised in that** said steerable platforms (13) can be steered through more than 10° at least about one axis.

18. A system according to claim 16, **characterised in that** it includes means for steering total thrust including means for differentially aiming said steerable platforms (13) and means for servo-controlling the thrust from each thruster (12, 12') to a predetermined value, thereby enabling total thrust to be generated that passes through the centre of mass (20) of the space vehicle and that has a component lying outside the orbital plane.

19. A system according to any one of claims 6 to 18, **characterised in that** said thrusters (12, 12') having high specific impulse also constitute means for controlling attitude and orbit of the space vehicle such as a satellite.

# FIG.1

# FIG.2

# FIG.3

FIG.4

FIG.5

FIG.6

FIG.7

NORD

X

TERRE

Z

8b

8a

13

12'

Y

9

9a

13

12

11

0

13

12'

-Y

13

15

12

-Z

10

10

FIG.8

-X

FIG.9

FIG.10

FIG.11

FIG.12

FIG.13

NORD

FIG.14

FIG.15